Europäisches Patentamt

European Patent Office

Office européen des brevets

(19)

(11) **EP 1 400 957 A2**

(12) **EUROPEAN PATENT APPLICATION**

(43) Date of publication:
   **24.03.2004 Bulletin 2004/13**

(51) Int Cl.$^7$: **G11B 5/39**

(21) Application number: **03003201.5**

(22) Date of filing: **20.02.2003**

(84) Designated Contracting States:
   **AT BE BG CH CY CZ DE DK EE ES FI FR GB GR
   HU IE IT LI LU MC NL PT SE SI SK TR**
   Designated Extension States:
   **AL LT LV MK RO**

(30) Priority: **03.09.2002 JP 2002257782**

(71) Applicant: **Hitachi, Ltd.
   Chiyoda-ku, Tokyo 101-8010 (JP)**

(72) Inventors:
   • **Hoshiya, Hiroyuki, Hitachi Ltd., Intell. Prop. Gr.
     Chiyoda-ku, Tokyo 100-8220 (JP)**
   • **Hoshino, Katsumi, Hitachi Ltd., Intell. Prop. Gr.
     Chiyoda-ku, Tokyo 100-8220 (JP)**
   • **Tsuchiya, Yuko, Hitachi Ltd., Intell. Prop. Gr.
     Chiyoda-ku, Tokyo 100-8220 (JP)**

(74) Representative: **Beetz & Partner Patentanwälte
   Steinsdorfstrasse 10
   80538 München (DE)**

(54) **Spin-valve head containing partial current-screening-layer, production method of said head,
   and current-screening method**

(57)   A magnetic head applies a current in a direction perpendicular to the film plane of a giant magnetoresistive multilayered film (101) and includes a current-screen layer (51) arranged very close to a free layer (13), which current-screen layer (51) screens or reduces an area in which the current flows to one half to one hundredth. When the magnetic head further includes a domain control film (4) on or in the vicinity of the giant magnetoresistive multilayered film, the resulting magnetic head has high output and high stability to thereby yield a magnetic recording and reading apparatus with a high recording density.

## FIG.3

## Description

BACKGROUND OF THE INVENTION

1. Field of the Invention

The present invention relates to a magnetic head for use in magnetic recording-reading apparatus, a production method of the head, and a current-screening method of such a magnetic head.

2. Description of the Related Art

Japanese Patent Application Laid-Open (JP-A) No. 07-73416 discloses a MR reproducing transducer having a soft active layer and an exchange layer in contact with the soft active layer. JP-A No. 07-169026 discloses a spin-valve sensor using an antiferromagnetic coupling film. JP-A No. 10-173252 discloses a magnetoresistive sensor including a lamination of highly resistive magnetic layers.

JP-A No. 10-284768 describes a magnetoresistive element having a ferromagnetic free layer and a supporting antiparallel-magnetization layer in contact with the ferromagnetic free layer. JP-A No. 11-259824 describes a tunneling magnetoresistive head including a hard magnetic film arranged on a free layer. JP-A No. 2001-230470 and JP-A No. 11-259824 each disclose a magnetoresistive element and a tunneling magnetoresistive head each containing a hard magnetic film arranged on a free layer.

USP No. 6,023,395 and JP-A No. 2001-250205 each disclose a thin-film magnetic head including a bias ferromagnetic film arranged on a free magnetic layer. JP-A No. 05-347013 and JP-A No. 06-223336 each disclose a magnetoresistive element and antiferromagnetic films sandwiching the magnetoresistive element.

JP-A No. 2000-156530 discloses a magnetoresistive element including, for example, an oxide layer interposed between magnetic layers. JP-A No. 10-173252 discloses a magnetoresistive sensor having a lamination of highly resistive magnetic layers each containing an oxide. Digests of 25th Annual Conference on Magnetics in Japan, 25p B-3, p37 (2001) describes a magnetoresistive element having very thin oxide layers interposed between magnetic layers and arranged on top of a free layer. Digests of 25th Annual Conference on Magnetics in Japan, 25p B-5, p39 (2001) describes a magnetoresistive element using a multilayered magnetic layer. JP-A No. 2002-157711 describes a spin-valve head with a current perpendicular to plane (CPP) structure having an insulator layer. JP-A No. 2002-176211 discloses a CPP-giant magnetoresistive (GMR) element having a region with a small area through which current passes.

Highly sensitive magnetic heads utilizing giant magnetoresistance have been used in practice as GMR heads or spin-valve heads. The GMR heads apply a sense current in an in-plane direction of a multilayered film to thereby yield changes in electric resistance due to an external magnetic field as read output. Sensors and magnetic heads have been proposed, which apply a sense current in a film thickness direction of a multilayered film to thereby yield changes in electric resistance due to an external magnetic field as read output. Tunneling magnetic resistance and current-perpendicular-to-plane (CPP) magnetic resistance are promising for use in these techniques. Such a tunneling magnetoresistive element comprises an insulator gap layer instead of the non-magnetic conductive layer of a spin-valve film. The insulator gap layer generally comprises aluminum oxide prepared by oxidizing a thin film of metallic aluminum. A current-perpendicular-to-plane giant magnetoresistive element comprises a metal layer such as Cu as a non-magnetic conductive layer as in the spin-valve film, since it utilizes a similar physical effect to the giant magnetic resistance in in-plane current devices.

The sensors and magnetic heads applying a current in a direction perpendicular to the film plane advantageously have a high MR ratio. However, their electric resistance is bottlenecking in their practical use. For example, the tunneling magnetoresistive sensors have an excessively high electric resistance, and CPP giant magnetoresistive sensors have an excessively low electric resistance when they have a sensor part having a size on the order of submicron, since such magnetic recording technologies are decreasing and decreasing in their recording bit size, and their sensor part now has a size on the order of submicron. This is because the tunneling magnetoresistive devices utilize a tunneling current passing through the insulator gap layer and thereby substantially have a high electric resistance, and in contrast, the CPP giant magnetoresistive devices have the non-magnetic conductive layer made of a metal controlling the magnetoresistance and thereby have a very low electric resistance in a direction perpendicular to the film plane.

The sensors applying an in-plane current basically do not change in their electric resistance with the size of a sensing area of a read head. However, the sensors applying a current in a direction perpendicular to the film plane change in their electric resistance inversely proportionally to the square of the size of the sensing area. With an increasing recording density of magnetic recording apparatus, the sensor size, i.e., the size of a sensor part of the magnetic heads such as track width and MR height decreases and thereby the sensor resistance of the current in a direction perpendicular to the film plane sharply increases.

The read output of the element increases proportionally to the element resistance but is also affected by noise induced by electric resistance. Noise derived from Johnson noise (thermal noise) increases with an increasing element resistance. In view of this, a signal-to-noise ratio (S/N) decreases with a decreasing area in a tunneling magnetoresistive system and other reading systems in which a resistance per area is high. In contrast, the CPP giant magnetoresistive systems and other systems with a low resistance per area have an increased S/N with a decreasing area and exhibit high reading capability as magnetic heads. Accordingly, the tunneling magnetoresistive elements must have a decreased electric resistance, and in contrast, the CPP giant magnetoresistive elements must have an increased electric resistance in a direction perpendicular to the film plane.

A possible solution to increase the electric resistance in the CPP giant magnetoresistive elements is increasing the film thickness, but even this technique increases the electric resistance at most two times. However, the electric resistance must be increased 10 to 1000 times to yield a sufficient electric resistance required in recent magnetic recording systems. Alternatively, a technique has been proposed in which a giant magnetoresistive multilayered film partially comprises a highly resistive semimetal or oxide, or a granular mixture of a metal with a highly resistive ferromagnetic substance or oxide (e.g., JP-A No. 10-173252), but this technique does not yield sufficient advantages.

The most effective technique is decreasing or screening an area of a current passing through in a direction perpendicular to the film plane. The electric resistance of the sensor element increases 10 times when the area is decreased to one tenth, and increases 100 times when the area is decreased to one hundredth. However, in conventional technologies, the area of the current applied in a direction perpendicular to the film plane is determined by a geometric size such as a track width corresponding to the recording density of magnetic recording systems and cannot simply be decreased to one tenth to one hundredth. Such a giant magnetoresistive film cannot be patterned within a size, for example, one tenth of the track width according to conventional technologies.

Even if the area of terminals (electrodes) applying a current in a direction perpendicular to the film plane or the contact area between the terminals and the giant magnetoresistive multilayered film can be decreased to a very small area instead of decreasing the area by patterning a very fine giant magnetoresistive multilayered film, it cannot solve the problems. When such a screened portion is, with respect to its size, distant from a non-magnetic intermediate layer serving as a non-magnetic conductive layer exhibiting giant magnetoresistance, the current flowing in a direction perpendicular to the film plane broadens while traveling between the screened portion to the intermediate layer in the giant magnetoresistive multilayered film. The current thereby has a large area in the region where the giant magnetoresistance substantially occurs, and the MR ratio induced by the giant magnetoresistance decreases although the electric resistance of the element increases. The broadening of the current is determined by the arrangement or location of the electric resistance among the screened portion and substances surrounding the screened portion. Control of the arrangement and the configuration of the screened layer alone can yield high read output.

When an antiferromagnetic film is used for substantially fixing the magnetization of the ferromagnetic pinned layer to thereby allow the current to flow in a direction perpendicular to the film plane, a high resistance induced by high resistance and large thickness of the antiferromagnetic film constitutes most of the element resistance to thereby decrease substantial output. This problem must also be solved. In a simple calculation, when the antiferromagnetic film has a thickness 1 to 1.5 times that of the other portions of the giant magnetoresistive multilayered film and an electric resistivity about 6 times that of the other components, the electric resistance of the antiferromagnetic film in a direction perpendicular to the film plane is about 6 to 10 times that of the other portions. Even if the giant magnetoresistive multilayered film substantially exhibits 100% MR ratio, the resulting element having the antiferromagnetic film serving as a serial resistance can only substantially exhibit 10% to 15% of the MR ratio.

To achieve sensors and in particular magnetic heads applying a current in a direction perpendicular to the film plane, elements having a resistance lower than the tunneling magnetoresistive elements and higher than the CPP giant magnetoresistive elements and having a high MR ratio must be developed.

In addition, such sensors applying a current in a direction perpendicular to the film plane must have a magnetic domain control structure to avoid noise and to yield linear output as in current-in-plane elements.

SUMMARY OF THE INVENTION

Accordingly, an object of the present invention is to solve the above problems and to provide a magnetic recording apparatus or a magnetic head using a magnetic sensor that can yield high read output corresponding to high-density recording. More specifically, an object of the present invention is to provide a sensor using a high-sensitivity magnetoresistive element applying a current to a giant magnetoresistive film in a direction perpendicular to the film plane and having an appropriate electric resistance and a high MR ratio, and a magnetic head with high read output, as well as to provide a magnetic recording and reading apparatus using the same and a current screening method of a magnetic head.

To achieve the above objects, the present invention provides, in an aspect, a magnetic head including a multilayered film exhibiting magnetoresistance; a pair of terminal films being arranged above and below a film plane of the multilayered film; and a current-screen layer being arranged between the pair of the terminal films and comprising a non-conductive area and a conductive area.

The current-screen layer may be arranged in the multilayered film. The multilayered film may include a ferromagnetic pinned layer; a non-magnetic intermediate layer serving as a non-magnetic conductive layer; a first soft magnetic free layer; a current-screen layer; and a second soft magnetic free layer sequentially laminated. The multilayered film may include a ferromagnetic pinned layer; a non-magnetic intermediate layer serving as a non-magnetic conductive layer; a soft magnetic free layer; a current-screen layer; and a domain control layer. The magnetic head may further include a non-magnetic separation layer arranged between the soft magnetic free layer and the current-screen layer.

The multilayered film may include a ferromagnetic pinned layer; a non-magnetic intermediate layer serving as a non-magnetic conductive layer; a first soft magnetic free layer; a current-screen layer; a second soft magnetic free layer; a non-magnetic separation layer; and a domain control layer sequentially laminated. The multilayered film may include a soft magnetic free layer; a non-magnetic intermediate layer serving as a non-magnetic conductive layer; a first ferromagnetic pinned layer; a current-screen layer; a second ferromagnetic pinned layer; and an antiferromagnetic layer sequentially laminated.

The conductive area in the current-screen layer constitutes one half to one hundredth of the total area of the current-screen layer. The distance between the current-screen layer and the non-magnetic intermediate layer is preferably 1 nm or more and 5 nm or less.

The current-screen layer may contain a mixture of a non-conductive material and a metal conductive material. Such current-screen layer preferably includes a mixture of at least one of silicon oxide and aluminum oxide with at least one element selected from copper, gold, silver, ruthenium, iridium, rhodium, rhenium, and osmium. More preferably, the current-screen layer includes a mixture of at least one element selected from aluminum and silicon with at least one oxide selected from aluminum oxide and silicon oxide.

The present invention also provides, in another aspect, a magnetic head including a multilayered film exhibiting magnetoresistance; a pair of terminal films being arranged above and below a film plane of the multilayered film; and a current-screen layer being arranged between the pair of the terminal films, in which the current-screen layer includes a film of a first conductive material; an island-like non-conductive layer arranged on the film of the first conductive material; and a second conductive material filling a gap among the island-like non-conductive layer.

The present invention relates to a magnetic head including a magnetoresistive multilayered film, a pair of terminal films being arranged above and below a film plane of the multilayered film, and a device for partially reducing an area constituting a path of a current flowing through the terminal films in a direction perpendicular to the film plane of the magnetoresistive multilayered film, in which the magnetoresistive multilayered film at least includes a soft magnetic free layer, a ferromagnetic pinned layer, and a non-magnetic conductive layer arranged between the soft magnetic free layer and the ferromagnetic pinned layer and serving as a non-magnetic intermediate layer.

The present invention also relates to a method for producing a magnetic head, including the steps of forming a lower shield layer on a substrate; forming a lower conductive gap layer on the lower shield layer; forming a magnetoresistive element on the lower conductive gap layer; forming a current-screen layer on the magnetoresistive element; forming an upper conductive gap layer on the current-screen layer; and forming an upper shield layer on the upper conductive gap layer, in which the step of forming the current-screen layer includes the steps of forming a film of a conductive material, and forming an island-like non-conductive layer on the film of the conductive material.

In addition and advantageously, the present invention relates to a method for producing a magnetic head, including the steps of forming a lower shield layer on a substrate; forming a lower conductive gap layer on the lower shield layer; forming a magnetoresistive element on the lower conductive gap layer; forming a current-screen layer on the magnetoresistive element; forming an upper conductive gap layer on the current-screen layer; and forming an upper shield layer on the upper conductive gap layer, in which the step of forming the current-screen layer includes the steps of forming a mixture film of an oxide and a noble metal, and subjecting the mixture film to heat treatment.

The present invention can provide a magnetic sensor with stable properties and high output and a magnetic head using the magnetic sensor. In particular, the present invention can provide a magnetic head and a high-density recording and reading apparatus that can yield satisfactory read output at a high recording density.

Further objects, features and advantages of the present invention will become apparent from the following description of the preferred embodiments with reference to the attached drawings.

BRIEF DESCRIPTION OF THE DRAWINGS

Fig. 1 is a schematic diagram of a giant magnetoresistive head as an embodiment of the present invention;

Fig. 2 is a schematic diagram of a giant magnetoresistive head as another embodiment of the present invention;

Fig. 3 is a schematic diagram of a giant magnetoresistive head as yet another embodiment of the present invention;

Fig. 4 is a schematic diagram of a current-screen layer of a giant magnetoresistive head of the present invention and a production method thereof as an embodiment;

Fig. 5 is a schematic diagram of another current-screen layer of the giant magnetoresistive head of the present invention and a production method thereof;

Fig. 6 is a schematic diagram of another current-screen layer of the giant magnetoresistive head of the present invention and a production method thereof;

Fig. 7 is a schematic diagram of yet another current-screen layer of the giant magnetoresistive head of the present invention and a production method thereof;

Fig. 8 is a schematic diagram of a current-screen layer of the giant magnetoresistive head of the present invention and a production method thereof by particle coating;

Fig. 9 is a schematic diagram of another current-screen layer of the giant magnetoresistive head of the present invention and a production method thereof by particle coating;

Fig. 10 illustrates current density distribution in current screening by current-screen layers having different sizes;

Fig. 11 illustrates current density distribution at positions in the z-direction with a varying conductive area diameter;

Fig. 12 illustrates a current efficiency at positions in the z-direction with a varying conductive area diameter;

Fig. 13 is a graph showing the relationship between the current efficiency and the properties of a read element;

Fig. 14 is a graph showing the relationship between the number and the diameter of conductive areas in the device of the present invention;

Fig. 15 is a graph showing the relationship between the conductive area diameter and the position in the z-direction of the current-screen layer;

Fig. 16 is a schematic diagram of a magnetic head including a magnetic sensor with a magnetoresistive element according to the present invention;

Fig. 17 is a schematic diagram of a magnetic recording and reading apparatus according to the present invention;

Figs. 18A, 18B, and 18C are diagrams each showing a configuration of the current-screen layer of the magnetic head of the present invention;

Fig. 19 is a diagram showing another configuration of the current-screen layer of the magnetic head of the present invention;

Figs. 20A, 20B, and 20C are diagrams each showing a configuration of a giant magnetoresistive film including the current-screen layer of the magnetic head of the present invention;

Figs. 21A and 21B are diagrams showing another configuration of a giant magnetoresistive film including the current-screen layer of the magnetic head of the present invention;

Fig. 22 is a schematic diagram of a current-screen layer according to the present invention;

Fig. 23 is a graph showing the effects of a current-screening method of the present invention; and

Fig. 24 is a schematic diagram of a magnetic head of the present invention with a low screen ratio.

## DESCRIPTION OF THE PREFERRED EMBODIMENTS

Initially, some embodiments of the present invention will be schematically illustrated below.

According to the present invention, a current-screen layer capable of at least partially screening the sense current is arranged on a spin-valve giant magnetoresistive multilayered film as a magnetoresistive multilayered film serving as a magnetic sensor. A pair of upper and lower terminals are arranged above and below the magnetoresistive multilayered film, and as a result, the current-screen layer is arranged between the pair of the upper and lower terminals. This configuration yields a magnetic recording apparatus including a magnetic head with a magnetic sensor that applies a sense current in a direction perpendicular to the film plane and is capable of achieving high density recording.

The term "current-screen layer" as used herein basically means:

a layer structure arranged crosswise in a current path, in which a current flows via a pair of terminals through a magnetoresistive film in a direction perpendicular to the film plane;

the layer structure has, in its plane, a part comprising a non-conductive material and a part comprising a conductive material.

By this configuration, the layer structure can screen the current path in a direction perpendicular to the film plane to a conductive area in the current-screen layer. By arranging the layer structure in the vicinity of or inside the magnetoresistive film, the layer structure enables the screening effect to serve as a substantial amplification effect of the electric resistance in the magnetoresistive film.

Arranging the current-screen layer inside the magnetoresistive multilayered film can increase the electric resistance of a CPP giant magnetoresistive element. Especially, by arranging the current-screen layer in contact with or in the vicinity of a non-magnetic metal intermediate layer, the broadening of a current in a direction perpendicular to the film plane in a non-magnetic conductive layer serving as the non-magnetic intermediate layer can be reduced to thereby increase the electric resistance. In contrast, a current in a direction perpendicular to the film plane in the antiferromagnetic film can be relatively broadened to thereby increase the MR ratio and to decrease the contribution of the electric resistance of the antiferromagnetic film to the total electric resistance of the device.

The magnetoresistive heads using these materials and configurations and the magnetic recording-reading apparatus using the magnetic head as a read part according to the present invention can achieve high-density recording, i.e., a short recording length on a recording medium and a narrow recording track width, can yield sufficient read output and can keep the record satisfactorily.

Examples of the configurations of such magnetic heads having a current-screen layer are as follows.

A magnetic head includes a magnetoresistive element having a multilayer structure comprising an antiferromagnetic layer; a ferromagnetic pinned layer; a non-magnetic conductive layer; a soft magnetic free layer; and a current-screen layer arranged in this order.

A magnetic head includes a magnetoresistive element having a multilayer structure comprising an antiferromagnetic layer; a ferromagnetic pinned layer; a non-magnetic conductive layer serving as a non-conductive intermediate layer; a soft magnetic free layer; a non-magnetic separation layer; and a current-screen layer arranged in this order.

The current-screen layer may be formed as a part of the soft magnetic free layer. More specifically, a magnetoresistive element for use herein may have a multilayer structure comprising an antiferromagnetic layer; a ferromagnetic pinned layer; a non-magnetic conductive layer serving as a non-conductive intermediate layer; a first soft magnetic free layer; a current-screen layer; and a second soft magnetic free layer arranged in this order. The first and second soft magnetic free layers are magnetically coupled via the current-screen layer and serve as a single free layer.

Likewise, the magnetoresistive element may have a multilayer structure comprising a soft magnetic free layer; a non-magnetic conductive layer serving as a non-magnetic intermediate layer; a first ferromagnetic pinned layer; a current-screen layer; a second ferromagnetic pinned layer; and an antiferromagnetic film arranged in this order. In this element, the current-screen layer is arranged as a part of a ferromagnetic pinned layer to thereby arrange the same in the vicinity of the non-magnetic conductive layer serving as the non-magnetic intermediate layer, and the first and second ferromagnetic pinned layers are magnetically coupled via the current-screen layer. In this case, the second ferromagnetic pinned layer preferably has a relatively large thickness (the reason therefor will be described later). More preferably, the second ferromagnetic pinned layer has a "synthetic ferrimagnetic structure" comprising a multilayered film including an anti-parallel coupling layer made of, for example, Ru; ferromagnetic material, an anti-parallel coupling layer; and a ferromagnetic material sandwitch structure.

The antiferromagnetic film used herein serves to apply exchange coupling bias to substantially fix the magnetization of the ferromagnetic pinned layer and may be arranged in direct contact with the ferromagnetic pinned layer or may apply exchange coupling bias indirectly through a magnetic coupling. Alternatively, another bias applying means such as residual magnetization of a hard magnetic layer or current bias can be used instead of the antiferromagnetic layer. The nonmagnetic separation layer is a very thin interlayer which suppresses the influence of, for example, a diffuse reaction between the current-screen layer and the soft magnetic free layer or the other components. Read output as a sensor is produced by action of giant magnetoresistance between the soft magnetic free layer and the ferromagnetic pinned layer with the interposition of the non-magnetic conductive layer due to magnetization rotation of the soft magnetic free layer.

The magnetoresistive magnetic sensor and magnetic head according to the present invention may further advantageously comprise a magnetic domain control structure. The magnetic domain control structure serves to convert the soft magnetic free layer into a single domain, which soft magnetic free layer undergoes magnetization rotation with respect to an external magnetic field to yield magnetoresistance. Such a device enables the soft magnetic free layer to be a single domain state and to yield output without hysteresis to a magnetic field to be detected. The domain control film may comprise, for example, a hard magnetic film. The magnetic domain control structure may be a hard bias structure in which the magnetoresistive multilayered film is formed in a width of a sensing area, i.e., in a track width. Hard magnetic films serving as the domain control films having a set thickness are arranged at both ends of the magnetoresistive film so as not cause an electric shorting to thereby avoid leakage or bypass of a sense current in a direction perpendicular to the film plane of the domain control film. The hard magnetic films is magnetized in a magnetization process so as to have residual magnetization in a track width direction. The residual magnetization induces a magnetic charge at the edge in a track width direction, the magnetic charge cancels a magnetic charge generated at the edge of the soft magnetic free layer to decrease static magnetic energy to thereby make the soft magnetic free layer a single domain. Alternatively, a domain control film is arranged in a direction perpendicular to the film plane of a magnetoresistive multilayered film particularly on a side near to the soft magnetic free layer and is patterned to substantially the same size. This procedure achieves single domain control more effectively.

In this case, the domain control film is arranged in a direction perpendicular to the film plane of the magnetoresistive multilayered film and thereby does not invite leakage or bypass of the current. The domain control film may comprise a hard magnetic film or a ferromagnetic film exchange-coupled with an antiferromagnetic film. A more effective magnetic domain control structure can be obtained by disposing an anti-parallel coupling layer between the soft magnetic free layer and the domain control layer, which anti-parallel coupling layer serves to yield a weak antiferromagnetic coupling.

Materials for use in these configurations will be described below. The antiferromagnetic film may comprise, for example, a MnPt film, a MnIr film, or a NiMn film. The ferromagnetic pinned layer may comprise, for example, a Co alloy, of which CoFe alloy and CoFeNi alloy are preferred. The ferromagnetic pinned layer may further comprise an anti-parallel coupling layer made of, for example, Ru or Rh to thereby constitute a synthetic ferrimagnetic structure having an antiferromagnetic coupling or may further comprise a very thin oxide layer. The soft magnetic free layer may comprise a NiFe alloy, a CoFe alloy, a CoFeNi alloy, or a multilayered film of these alloy films. The non-magnetic intermediate layer serving as the non-magnetic conductive layer preferably comprises Cu but may comprise Au, Ag, or another element. The non-magnetic separation layer preferably comprises Cu, Ta, or Ru but may comprise a relatively wide variety of materials. The non-magnetic separation layer is generally used to yield a configuration with substantially no magnetic coupling and can also be used for magnetic domain control or for bias control. In this case, the non-magnetic separation layer is set to have an appropriately weak function as an anti-parallel coupling layer. The non-conductive area of the current-screen layer preferably comprises alumina or an aluminum oxide.

The current-screen layer preferably comprises alumina or an aluminium oxide as in the insulator gap layer or a mixture of alumina or aluminum oxide with a metal resistant to oxidation, such as Cu, Au, Ag, Pt, Ru, Ir, Rh, Re, and Os. Si can be used in combination with the Al oxide.

Embodiments of the present invention will be illustrated in further detail with reference to several examples below and the attached drawings.

EXAMPLE 1

Several embodiments relating to the arrangement of the current-screen layer according to the present invention will now be described.

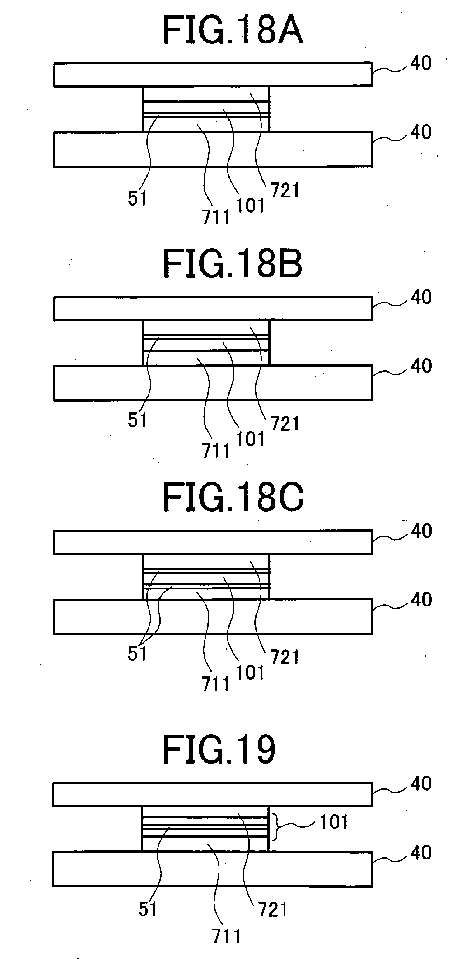

Figs. 18A, 18B and 18C are diagrams showing configurations of the current-screen layer of the magnetic head of the present invention. The magnetic head shown in Fig. 18A includes a lower conductive gap film 711, a current-screen layer 51, a giant magnetoresistive multilayered film 101, an upper conductive gap film 721, and a pair of terminals 40 sandwiching these components. The magnetic head shown in Fig. 18B includes a lower conductive gap film 711, a giant magnetoresistive multilayered film 101, a current-screen layer 51, an upper conductive gap film 721, and a pair of terminals 40 sandwiching these components. The magnetic head shown in Fig. 18C includes a lower conductive gap film 711, a current-screen layer 51, a giant magnetoresistive multilayered film 101, a current-screen layer 51, an upper conductive gap film 721, and a pair of terminals 40 sandwiching these components.

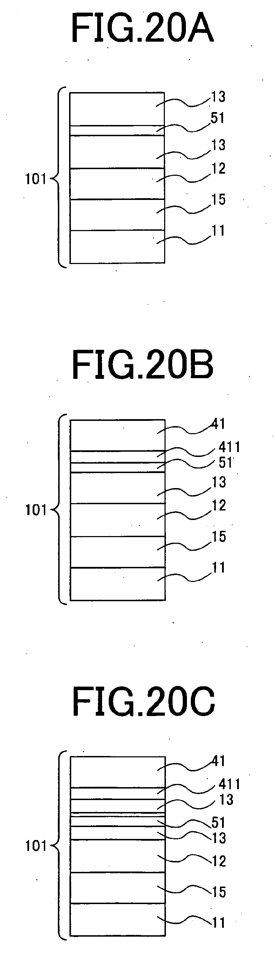

Fig. 19 is diagram of another configuration of a current-screen layer of the magnetic head of the present invention. The magnetic head shown in Fig. 19 includes a lower conductive gap film 711, a giant magnetoresistive multilayered film 101, an upper conductive gap film 721, and a pair of terminals 40 sandwiching these components. The giant magnetoresistive multilayered film 101 includes a current-screen layer 51 inside its multilayer structure. More specific configurations are shown in Figs. 20A, 20B, and 20C.

Figs. 20A, 20B, and 20C illustrate configurations of the giant magnetoresistive multilayered film including a current-screen layer of the magnetic heads of the present invention. The giant magnetoresistive multilayered film shown in Fig. 20A is an assemblage of an antiferromagnetic film 11, a ferromagnetic pinned layer 15, a non-magnetic conductive layer 12 serving as a non-magnetic intermediate layer, a soft magnetic free layer 13, a current-screen layer 51, and a soft magnetic free layer 13. The giant magnetoresistive multilayered film shown in Fig. 20B is an assemblage of an antiferromagnetic film 11, a ferromagnetic pinned layer 15, a non-magnetic conductive layer 12, a soft magnetic free layer 13, a current-screen layer 51, a non-magnetic separation layer 411, and a domain control film 41. The giant magnetoresistive multilayered film shown in Fig. 20C is an assemblage of an antiferromagnetic film 11, a ferromagnetic pinned layer 15, a non-magnetic conductive layer 12 serving as a non-magnetic intermediate layer, a soft magnetic free layer 13, a current-screen layer 51, another soft magnetic free layer 13, a non-magnetic separation layer 411, and a domain control film 41. In these elements, the domain control film 41 and the non-magnetic separation layer 411 are each shown as a part of the giant magnetoresistive multilayered film 101. These components are preferably concurrently produced in a thin-film formation process and are illustrated herein as an integral assemblage. However, the domain control film and non-magnetic separation layer do not substantially contribute to giant magnetoresistance and can be distinguished from the giant magnetoresistive multilayered film 101 without any substantial problem.

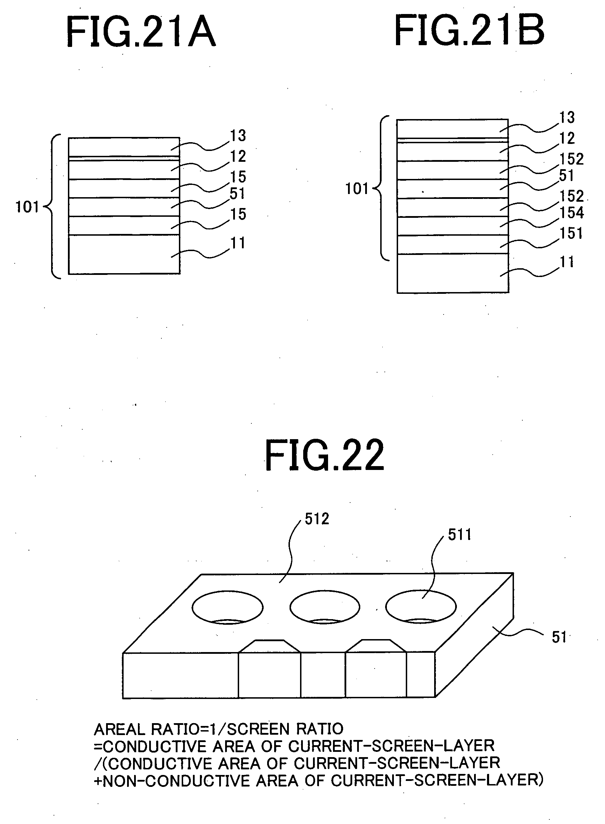

Figs. 21A and 21B illustrate configurations of the giant magnetoresistive multilayered films including a current-screen layer of the magnetic heads of the present invention. The giant magnetoresistive multilayered film shown in Fig. 21A includes an assemblage of an antiferromagnetic film 11, a ferromagnetic pinned layer 15, a current-screen layer 51, a ferromagnetic pinned layer 15, a non-magnetic conductive layer 12 serving as a non-magnetic intermediate layer, and a soft magnetic free layer 13. The giant magnetoresistive multilayered film shown in Fig. 21B includes an assemblage of an antiferromagnetic film 11, a first ferromagnetic pinned layer 15, an anti-parallel coupling layer 154, a second ferromagnetic pinned layer 152, a current-screen layer 51, another second ferromagnetic pinned layer 152, a non-magnetic conductive layer 12 serving as a non-magnetic intermediate layer, and a soft magnetic free layer 13. In the configurations of Figs. 21A and 21B, the ferromagnetic pinned layers sandwiching the current-screen layer 51 are ferromagnetically coupled to serve as an integral ferromagnetic film.

Fig. 22 is a schematic diagram of a current-screen layer according to the present invention. The current-screen layer 51 comprises a non-conductive area 512 and a conductive area 511. The conductive area 511 comprises a conductive material such as a metal and is arranged with a specific areal ratio in the non-conductive area 512. The non-conductive area 512 comprises an insulative material or a non-conductive material having an electric resistance substantially near to that of an insulative material. The term "areal ratio" as used herein means a ratio of the area of the conductive area 511 to the total area of the current-screen layer 51 and is determined according to the following equation: Areal Ratio = 1/(Screen ratio) = (Conductive Area) /[(Conductive Area)+ Non-conductive Area)] The screen ratio is determined as the reciprocal of the areal ratio. Namely, the areal ratio means a ratio of an area of a portion through which the current flows in the current-screen layer 51.

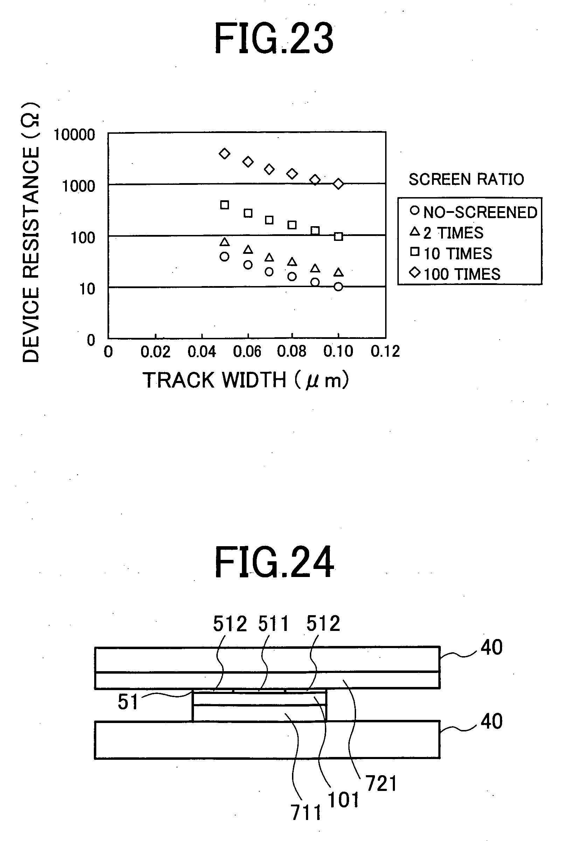

Fig. 23 is an approximation diagram showing the effects of the current screening according to the present invention. The device resistance of a magnetic head calculated at an areal resistance of 0.1 $\Omega.\mu m^2$ is determined according to the following equation: Device Resistance = (Areal Resistance)/[(Track Width) (MR Height)]

Fig. 23 shows the device resistance assuming that the track width is equal to the MR height in a magnetic disc apparatus with a track width of 100 Gb/in$^2$ or more. When the screen ratio is within a range from 2 to 100, the device resistance is several ten ohms to several hundred ohms and is appropriate to yield output as a read head. When the screen ratio is 100, the device resistance is several thousand ohms and exceeds an appropriate range as a magnetic head, since noise due to the resistance increases.

The screen ratio in the present invention is preferably equal to or more than about 2 and less than or equal to about 100. In other words, the areal ratio is preferably one half to one hundredth. The screen ratio may be 1 or more and less than 2. However, when the current-screen layer has plural conductive areas as shown in Fig. 22, the screen ratio may not be significantly controlled to 1 or more and less than 2. When the screen ratio is within the above-specified preferred range but near to 2, the current-screen layer preferably has a single conductive area as shown in Fig. 24.

Fig. 24 is a schematic diagram of a configuration of a magnetic head of the present invention with a low screen ratio. The magnetic head includes a lower conductive gap film 711, a giant magnetoresistive multilayered film 101, a current-screen layer 51, an upper conductive gap film 721, and a pair of terminals 40 sandwiching these components. The current-screen layer 51 comprises a single conductive area 511 and a non-conductive area 512. A sense current flows into the conductive area 511 to serve as a magnetic head. The conductive area 511 of the current-screen layer 51 can be prepared by any process but is preferably prepared as a pattern having a width narrower than the track width by a photo-resist process.

EXAMPLE 2

Thin films constituting a giant magnetoresistive multilayered film according to the present example were prepared by sequentially stacking the following materials on a ceramic substrate 1 mm thick in an atmosphere of argon gas at 1 to 6 millitorrs (mTorr) using a radio-frequency magnetron sputtering apparatus. Sputtering targets for use herein were tantalum, nickel-20 atomic % iron alloy, copper, cobalt, MnPt, ruthenium, alumina, MnIr, and aluminum targets. Fe and Ni 1-cm square chips were appropriately arranged on the Co target to thereby control the composition. Au, Ag, Pt, and other chips were appropriately arranged on the Ru and Cu targets to thereby form alloy thin films. Likewise, Au, Ag, Pt, Al, and other chips were appropriately arranged on the alumina target to thereby form a granular thin film. Rf power was applied to each of cathodes on which each of the targets was placed to thereby generate plasma in the apparatus, and each shutter arranged in each cathode was opened and then closed one by one to form individual layers sequentially to thereby yield a multilayered film. During these film formation procedures, a magnetic field of about 80 oersteds was applied in parallel with the substrate using a permanent magnet to thereby allow the resulting films to have uniaxial anisotropy.

The resulting multilayered film was subjected to heat treatment at 270°C in vacuum in a magnetic field for 3 hours to thereby cause phase transition of the MnPt antiferromagnetic film. The magnetoresistance of the resulting film was determined at room temperature. When another antiferromagnetic film was used in addition to MnPt, another magnetization heat treatment at another temperature was further employed. When a hard magnetic film was used, the resulting film was subjected to a magnetization treatment at room temperature after the heat treatment. A device on the substrate was patterned by a photo-resist process. The substrate was then subjected to a slider process and was mounted on a magnetic recording apparatus.

The configurations of the magnetic head of the present invention will be illustrated below with reference to the drawings.

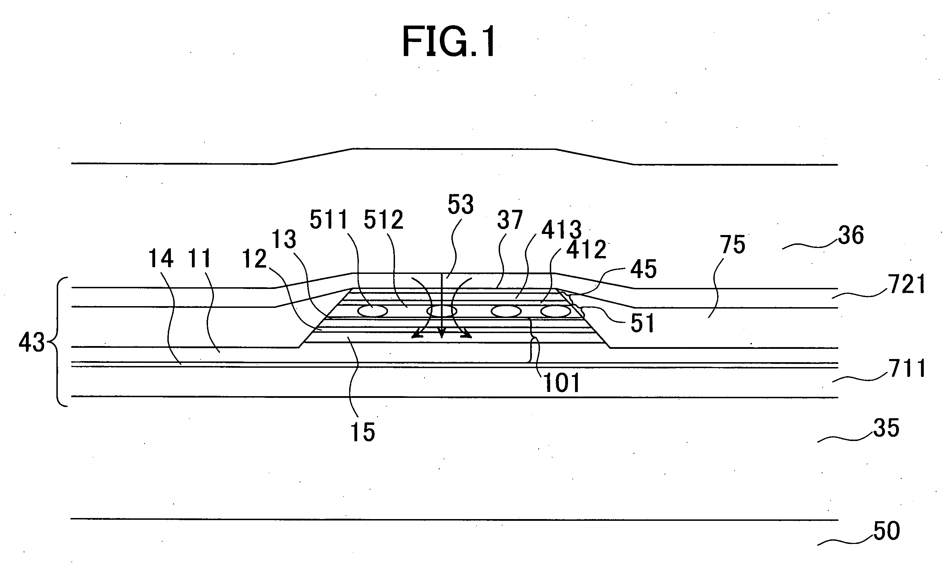

Fig. 1 illustrates a configuration of a magnetic sensor according to the present invention, showing one of principles of the magnetic sensor. Fig. 1 is a schematic diagram of the magnetic sensor used as a magnetic head viewed from an air bearing surface facing a magnetic medium. The magnetic head comprises a substrate 50, a lower magnetic shield 35, a lower conductive gap film 711, a giant magnetoresistive multilayered film 101, a current-screen layer 51, and a single domain control ferromagnetic layer 45 sequentially arranged on the substrate 50. The magnetic head further comprises an upper conductive gap film 721, and an upper magnetic shield 36 to thereby yield a read gap 43 for detecting read signals. An insulative film 75 defines an area in which a current is applied to the giant magnetoresistive multilayered film 101 in a direction perpendicular to the film plane and is arranged around the area. The giant magnetoresistive multilayered film 101, the current-screen layer 51, and the single domain control ferromagnetic film 45 are patterned to substantially set shapes and thereby define an area through which the current passes and a magnetic action area. In this magnetic head, the single domain control ferromagnetic film 45 is a multilayered film arranged above the giant magnetoresistive multilayered film 101 to control the magnetic domain of the sensor part of the giant magnetoresistive multilayered film 101 to thereby yield stable output.

The term "free layer" or "soft magnetic free layer" for use herein means a soft magnetic film that undergoes magnetization rotation by action of an external magnetic field. The term "pinned layer" or "ferromagnetic pinned layer" means a ferromagnetic layer exhibiting magnetization substantially fixed with respect to a magnetic field to be detected. To fix the magnetization of such a pinned layer, an antiferromagnetic film is used. A hard magnetic film can also be used instead of the antiferromagnetic film. The hard magnetic film exhibits such magnetization that does not vary unless a relatively large magnetic field is applied. Alternatively, a multilayered ferromagnetic pinned layer called as specular effect or synthetic ferrimagnet may be employed.

The single domain control ferromagnetic film 45 in the magnetic head of the present example comprises a ferromagnetic layer 412 and an antiferromagnetic layer 413 arranged thereon. The magnetization of the ferromagnetic layer 412 is substantially fixed or remains in a set direction, particularly in a track width direction due to exchange coupling magnetic field formed at the contact interface between the antiferromagnetic layer 413 and the ferromagnetic layer 412. However, another configuration can also be employed to yield similar effects. For example, the single domain control ferromagnetic film 45 may comprise a hard magnetic film. The giant magnetoresistive multilayered film 101 in the magnetic head includes a continuous assemblage of an underlayer 14, an antiferromagnetic film 11, a ferromagnetic pinned layer 15, a non-magnetic conductive layer 12 serving as a non-magnetic intermediate layer, and a soft magnetic free layer 13. In this configuration, the ferromagnetic pinned layer 15 is a single layer but can be a multilayer. Such a multilayered ferromagnetic pinned layer 15 is preferably an assemblage comprising ferromagnetic layers laminated with the interposition of a layer of, for example, Ru which exhibits magnetic anti-parallel coupling. In other words, the multilayered ferromagnetic pinned layer 15 is preferably an assemblage of a ferromagnetic layer, an anti-parallel coupling layer, and a ferromagnetic layer laminated in this order. This type of ferromagnetic pinned layer yields substantially no static magnetic field.

The soft magnetic free layer 13 illustrated herein is a single layer of a magnetic material, but two or higher multilayered assemblage as the soft magnetic free layer 13 is also included within the scope of the present invention. Particularly, the soft magnetic free layer 13 preferably comprises a Co alloy layer near to the non-magnetic conductive layer 12 serving as the non-magnetic intermediate layer, and a NiFe alloy layer far from the non-magnetic conductive layer 12. This type of the soft magnetic free layer 13 can yield both satisfactory soft magnetic properties and a high MR ratio. The magnetic head may further comprise an appropriate protective layer arranged on the giant magnetoresistive multilayered film 101. Such a protective layer preferably exhibits good conductivity and has a thickness of less than or equal to several nanometers not to inhibit the effects of the current-screen layer as mentioned below.

In the configuration of Fig. 1, a sense current applied in a direction perpendicular to the film plane flows from a terminal (not shown) through a path comprising the magnetic shield 36, the upper conductive gap film 721, the protective-terminal film 37, and the single domain control ferromagnetic film 45 via the current-screen layer 51 into the giant magnetoresistive multilayered film 101. The current further passes through a path comprising the lower conductive gap film 711, and the lower magnetic shield 35 into another terminal (not shown) to thereby constitute a current path in a direction perpendicular to the film plane. Naturally, the current path can be reversed or can be formed so as to bypass the magnetic shield part by employing another terminal configuration. One of features of the present invention resides in the current path in the giant magnetoresistive multilayered film 101. The current path is schematically illustrated by an arrow 53 in Fig. 1.

The term "current-screen layer" as used herein basically means a layer structure arranged crosswise in a current path, in which a current flows from a pair of terminals through a magnetoresistive film in a direction perpendicular to the film plane; and the layer structure has, in its plane, a part comprising a non-conductive material such as a hole part embedded in a non-conductive layer comprising a non-conductive material. By this configuration, the layer structure can screen the current path in a direction perpendicular to the film plane to a conductive area in the current-screen layer. By forming the layer structure in contact with or within the magnetoresistive film, the structure can use the screening effect as substantial amplification effect of the electric resistance of the magnetoresistive film.

The current-screen layer will be illustrated in further detail with reference to the present example. The current-screen layer 51 includes a conductive area 511 and a non-conductive area 512. The conductive area 511 comprises, for example, particles of a highly conductive metal such as Au, Cu, or Al, shows an electric resistivity much lower than the non-conductive area 512 and has an area at a set ratio, for example, one half to one hundredth of the area of the current-screen layer 51. The current in a direction perpendicular to the film plane flows in a large area in the upper magnetic shield 36 and the upper conductive gap film 721 but is screened by action of the non-conductive film 75 into the giant magnetoresistive multilayered film 101. If the magnetic head does not include the current-screen layer 51, the current in a direction perpendicular to the film plane flows substantially uniformly in the plane of the giant magnetoresistive multilayered film 101. However, according to the configuration of the present invention, the current-screen layer 51 allows the current in a direction perpendicular to the film plane to concentrate to the conductive area 511 in the current-screen layer 51. Thus, the area in which the current in a direction perpendicular to the film plane can be screened at a set ratio with respect to the area of the giant magnetoresistive multilayered film 101, i.e., at a ratio corresponding to the areal ratio of the conductive area 511.

The current passes through the current-screen layer 51 and flows into the giant magnetoresistive multilayered film 101. The current in a direction perpendicular to the film plane passes in an increasing area with an increasing distance from the conductive area 511. However, in the configuration of the present invention, the distance between the current-screen layer 51 and the non-magnetic conductive layer 12 serving as the non-magnetic intermediate layer in the giant magnetoresistive multilayered film 101 is reduced to less than or equal to 5 nm and preferably less than or equal to 3 nm. Thus, the current can enter the non-magnetic conductive layer 12 in a relatively small area. The term "distance between layers" as used herein means a distance between interfaces near to the individual layers.

Accordingly, read output with a higher electric resistance and a higher MR ratio can be obtained due to giant magnetoresistance by the current in a direction perpendicular to the film plane than in the case where the current passes in the entire area of the giant magnetoresistive multilayered film 101. To reduce the distance between the current-screen layer 51 and the non-magnetic conductive layer 12 in the giant magnetoresistive multilayered film 101 to the above-specified range, the thickness of the soft magnetic free layer 13 may be reduced to 5 nm or less and preferably 3 nm or less. The magnetic head preferably further comprises a non-magnetic separation layer (not shown) between the current-screen layer 51 and the soft magnetic free layer 13 to ensure satisfactory magnetic properties of the soft magnetic free layer 13, to control magnetostriction and to reduce coercivity. However, the thickness of the non-conductive separation layer is also added to the distance between the current-screen layer 51 and the non-magnetic conductive layer 12, the thickness is therefore preferably decreased as small as possible and is particularly preferably 1 nm or less. By the same token, the total thickness of the soft magnetic free layer 13 and the non-conductive separation layer is preferably 5 nm or less and more preferably 3 nm or less.

According to the configuration of the present invention, the current in a direction perpendicular to the film plane broadens after passing through the non-magnetic conductive layer 12 as indicated by the arrow 53 and passes through the antiferromagnetic film 11 in an area as much as several times that during passing through the non-magnetic conductive layer 12. Thus, the contribution of the antiferromagnetic film 11 to the electric resistance in a direction perpendicular to the film plane can be reduced in substantially proportional to the minus square of the aforementioned broadening. The current passed through the giant magnetoresistive multilayered film 101 serves as a sense current in a broadened area while passing through the lower conductive gap film 711 and the lower magnetic shield 35.

The conductive area 511 of the current-screen layer 51 distributes as dots or islands in the insulative area (non-conductive area) 512 and constitutes the current-screen layer 51 at a set areal ratio of, for example, one hundredth to one half. The size of the conductive area 511 is preferably several times or more the distance to the non-magnetic conductive layer 12 and the thickness of the soft magnetic free layer 13. This is based on the geometrical requirement to make the broadening of the current between the current-screen layer 51 and the non-magnetic conductive layer 12 relatively trivial. The size of the conductive area 511 should be sufficiently smaller than that of a magnetic recording unit to be detected. If the size of the conductive area 511 is equivalent or one twice, one third, or one fourth the size of the magnetic recording unit to be detected, such as track width or MR height, and the size of the sensor part of the device, the number of the conductive area 511 in the sensor part is excessively small, thus the resulting device does not have stable properties.

The current-screen layer 51 can have a variety of configurations including the above configurations and can be prepared by any production procedure. For example, Cu, Ag or another metal is formed into island structure to thereby form the conductive area 511, and the other part surrounding the island-like conductive area 511 is filled with a matrix of aluminum oxide to thereby form the non-conductive area 512. A thin film of a mixture of aluminum with, for example, Cu, Ag, Au, or Pt is formed, and the resulting thin film is subjected to heat treatment to deposit metal particles to thereby yield the current-screen layer 51. Alternatively, a thin film of a mixture of aluminum with islands of, for example, Cu, Ag, Au, or Pt is formed, and the resulting thin film is subjected to oxidization treatment to allow unoxidized metal particles remained in alumina to thereby yield the current-screen layer 51.

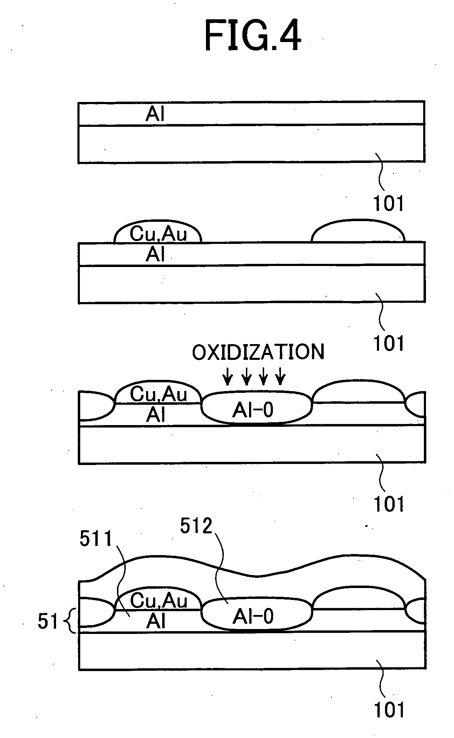

The current-screen layer 51 is preferably prepared by the procedure shown in Fig. 4. More specifically, an Al layer is formed, islands of, for example, Cu or Au are formed, the Al layer is partially oxidized using the islands as a mask to thereby yield the conductive area 511 made of Al and the non-conductive area 512 made of Al-O at a set areal ratio. Such a configuration including a self-alignment form such as the island-structure can be used in the present invention.

Specifically, one of essential principles of the present invention is as follows. The current-screen layer 51 having a partial conductive area in a small area in its plane is arranged in the vicinity of the non-magnetic conductive layer 12, and a current in a direction perpendicular to the film plane is applied to the giant magnetoresistive multilayered film 101. Thus, the current in a direction perpendicular to the film plane entered the non-magnetic conductive layer 12 is screened into a set area to thereby achieve a high device resistance and a high MR ratio. In addition, increase of the device resistance and decrease of the MR ratio due to the antiferromagnetic film 11 can be prevented.

These advantages can be obtained in any case that the antiferromagnetic film or another highly resistive film is arranged above, below, or both above and below the current-screen layer 51. The present invention can therefore provide a GMR sensor comprising antiferromagnetic films being arranged above and below the current-screen layer. For example, the device shown in Fig. 1 has the antiferromagnetic film 46 for magnetic domain control and the antiferromagnetic film 11 of the giant magnetoresistive multilayered film 101 being arranged above and below the current-screen layer 51. This device can be a sensor with a high MR ratio.

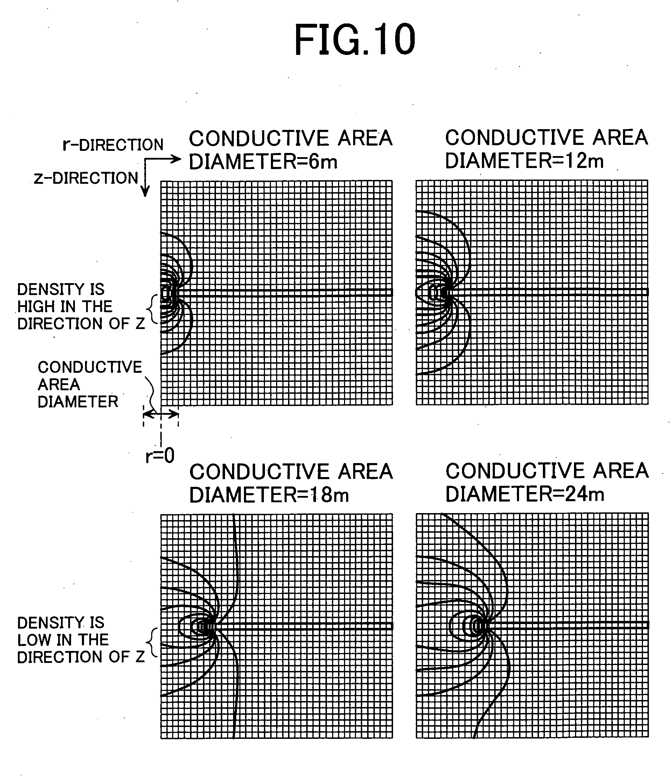

Next, the multilayer configuration and its size of the current-screen layer according to the present invention will be described. Fig. 10 illustrates current distributions in current screening by current-screen layers having different sizes. Data used herein are calculated by assuming columnar (z-r) coordinates. A conductive material is divided into 40 x 40 cells 1 nm in the z-direction and 1 nm in the r-direction. An insulative part (shown by the thick lines in Fig. 10) having a circular hole (conductive area) around the position where r is zero is arranged in the conductive material. A voltage is applied in the z-direction to determine current distributions by calculation. Specifically, current distributions of conductive areas of the current-screen layer are verified in a computer experiment, which conductive areas can be treated as independent parts in such a distance that effects of individual parts can be neglected. The current distributions are shown as a contour drawing of a current component in the z-direction. The current flows through a path specified by the non-conductive area shown by the thick lines in the figure and passes through the hole-like conductive area in a set size without non-conductive area. The current before and after passing through the hole-like conductive area broadens in the r-direction, and the degree or magnitude of broadening varies with a varying size of the conductive area. When the diameter of the conductive area is as small as 6 nm, several contour lines of the current in the z-direction from the position of the hole are present within 1 nm and are dense, indicating that the current rapidly disperses and decreases. The intervals of the contour lines broaden with an increasing diameter of the conductive area, indicating that the broadening of the current is small even at a distant from the hole in the z-direction when the conductive area has a large size.

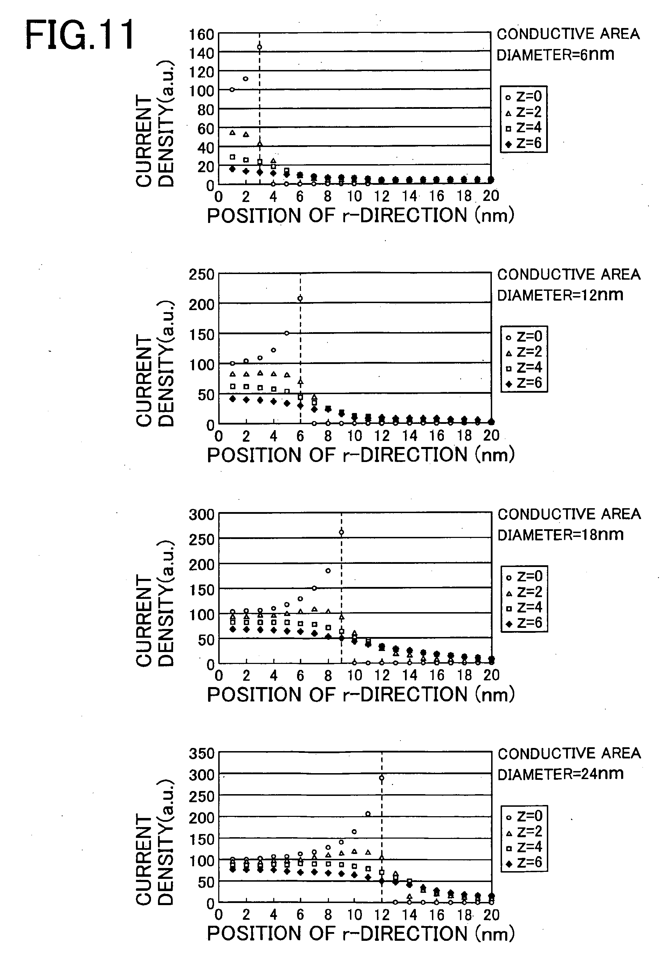

Fig. 11 illustrates current density distributions at positions in the z-direction with a varying conductive area diameter. The current distributions are shown by specifying the current density at the center of the conductive area as 100. The edge of the conductive area is shown by dotted lines in the figure. In a position where z is zero, i.e., in a position directly above or under the conductive area, the current becomes zero in portions where the r-position is larger than the conductive area diameter by action of the insulative (non-conductive) area. The current density is high at the edge of the conductive area. This is because the current wraparounds the non-conductive area and passes through the shortest path to thereby concentrate at the edge of the hole-like conductive area. At positions where the z-direction is more than zero, i.e., at positions distant from the hole-like conductive area in the z-direction, the current density is high at the center of the hole and decreases with an increasing position of the r-direction.

Next, the current distribution is determined with a varying size of the conductive area. When the conductive area diameter is 6 nm, the current density in the vicinity of a position where r is zero rapidly decreases with an increasing z. In addition, the current density sweeps at positions where r is larger than the conductive area diameter, i.e., on the right hand of the dotted lines in the figure, showing that the current density has a broadening distribution with an increasing z. In contrast, when the conductive area diameter is as large as 24 nm, the decrease of the current density in the vicinity of the position where r is zero with an increasing z is much smaller than the case where the conductive area diameter is small, indicating that the current density has a narrower distribution with an increasing conductive area diameter.

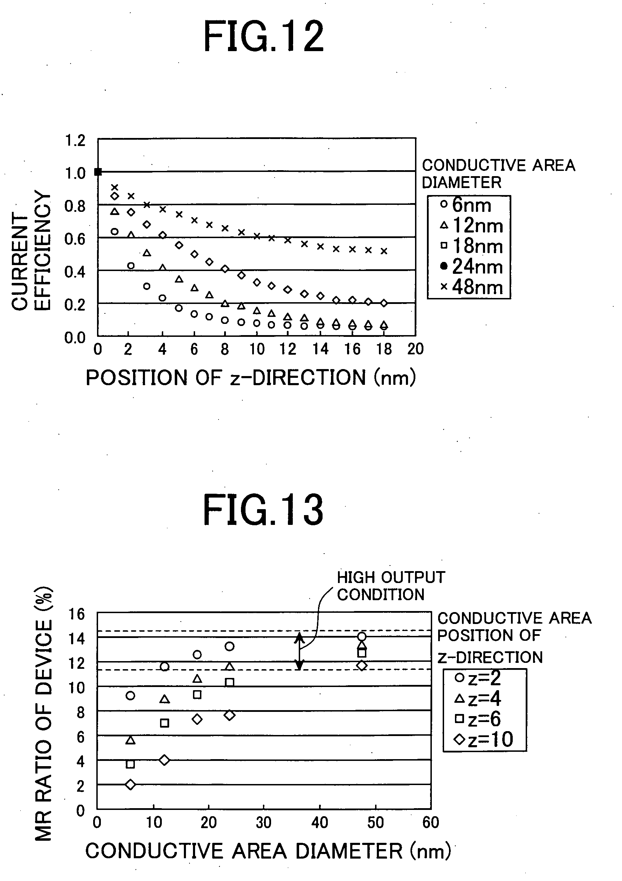

Fig. 12 illustrates the current efficiency at positions in the z-direction with a varying conductive area diameter. The term "current efficiency" as used herein means the total of currents passing in an area in a z-position corresponding to the conductive area, which total is specified by assuming that the total of currents passing through the conductive area, where z is zero, is 1. The current efficiency can be an index of the degree of screening of the current at a position in the z-direction, which current has been screened by action of the hole-like conductive area. When the conductive area has a diameter of 6 nm, the current sharply decreases from 1 in the conductive area to about 0.6 at a position where z is 1 nm, showing that the effect of current screening decreases about 40 percent at a distance of only 1 nm in the z-direction from the conductive area when the conductive area has a small diameter. In contrast, when the conductive area has a diameter of 48 nm, the current relatively gradually decays with an increasing z and becomes, for example, about 0.8, i.e., about 80% of the effect of current screening at a position where z is 4 nm. The size-dependency of the current screening effect directly affects the properties of the resulting magnetoresistive element.

Fig. 13 is a graph showing the relationship between the current efficiency and the properties of the read device. The screen ratio $\beta$ is defined as the reciprocal of the areal ratio of the conductive area. The device resistance $R_1$ and the change in resistance $\Delta R_1$ in a device without using the current-screen layer according to the present invention are determined by calculation according to the following equations:

$$R_1 = \rho_{MR}t_{MR}/S_{MR} + \rho_{AF}t_{AF}/S_{MR}$$

$$\Delta R_1 = MR\rho_{MR}t_{MR}/S_{MR}$$

wherein $S_{MR}$ is the device area; So is the area of one conductive area; $\rho_0$, $\rho_{MR}$, and $\rho_{AF}$ are electric resistivities of the conductive area, the giant magnetoresistive part and the antiferromagnetic film, respectively; $t_0$, $t_{MR}$, $t_{AF}$ are the thickness of the conductive area, the giant magnetoresistive part and the antiferromagnetic film, respectively; and MR is the MR ratio of the giant magnetoresistive part. The device resistance $R_0$ and the change in resistance $\Delta R_0$ in a device using the current-screen layer according to the present invention are determined by calculation according to the following equations:

$$R_0 = \rho_0 t_0 \beta/S + \rho_{MR}t_{MR0}\beta\gamma/S_{MR} + \rho_{AF}t_{AF}/S_{MR}$$

$$\Delta R_0 = MR\rho_{MR}t_{MR0}\beta\gamma/S_{MR}$$

wherein $\beta$ is the screen ratio; and $\gamma$ is the current efficiency.

Into the above equations, $\rho_0 = 30 \times 10^{-8}$ $\Omega m$,

$\rho_{MR} = 30 \times 10^{-8}$ $\Omega m$, $\rho_{AF} = 180 \times 10^{-8}$ $\Omega m$, $t_0 = 2 \times 10^{-9}$ m, $t_{MR} = 3 \times 10^{-9}$ m, $t_{AF} = 15 \times 10^{-9}$ m, MR = 0.3 (30%), and $\beta = 100$ are substituted. The results in Fig. 13 show that the MR ratio $\Delta R/R$ of the device increases with an increasing diameter of the hole-like conductive area, that $\Delta R/R$ decreases with an increasing distance in the z-position from the conductive area, and that the influence of the distance in the z-direction on this phenomenon is larger than that of the conductive area diameter. The MR ratio $\Delta R/R$ is preferably sufficiently close to a saturated value as in a region between the two dotted lines in Fig. 13. To obtain sufficiently high output, the device must structurally have a specific relationship between the conductive area diameter and the position in the z-direction from the conductive area. For example, when z is 2 nm, the conductive area diameter may be about 10 nm or more. When z is 6 nm, the conductive area diameter must be about 30 nm or more. The conductive area diameter also depends on the device size.

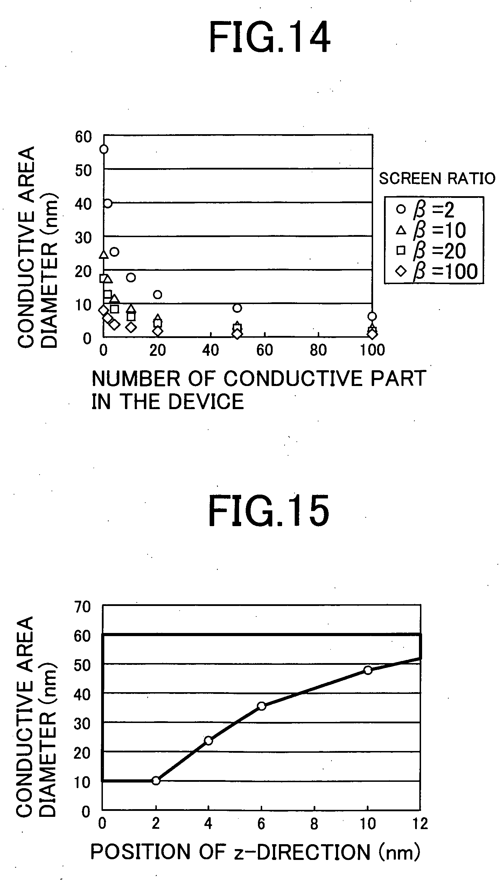

Fig. 14 is a graph showing the relationship between the number and the diameter of conductive areas in a device. The hole-like conductive areas insulated by an insulative material are arranged in a device having a set size. The conductive areas are thereby restricted under conditions of, for example, (1) the size thereof is smaller than that of the device, (2) the areal ratio of plural conductive areas is half or less of the area of the device to isolate the plural conductive areas independently, and (3) the total area thereof is such an area as to yield a set screen ratio $\beta$. Fig. 14 shows the number and diameter of the conductive areas that satisfy the above requirements as calculated according to the following formula:

$$(d/2)^2 \leq S_{MR}/ (2\pi n\beta)$$

wherein $S_{MR}$ is the area of the device; n is the number of conductive areas in the device; $\beta$ is the screen ratio; and d is the conductive area diameter.

In the calculation, the device area is assumed as 0.1 $\mu m$ square which is a typical size in a magnetic recording apparatus. Fig. 14 shows that the conductive area diameter must decrease with an increasing screen ratio $\beta$ and with an increasing number of the conductive areas in the device, and that the conductive area diameter must be 60 nm or less even if the screen ratio $\beta$ is as small as 2 and it must be 30 nm or less in regular cases. These requirements define the maximum of the conductive area diameter. The requirements shown in Figs. 13 and 14 define the size of conductive areas of the current-screen layer and the arrangement thereof in the z-direction.

Fig. 15 is a graph showing the relationship between the conductive area diameter and the position in the z-direction of the current-screen layer. The structural conditions enclosed by the thick line in Fig. 15 satisfy the requirements shown in Figs. 13 and 14 to thereby yield high device output. When the position in the z-direction is as small as about 2 to 3 nm, namely, when the current-screen layer is arranged very close to the non-magnetic intermediate layer as a core of the magnetoresistive part, the resulting device can yield high output with a conductive area diameter in a wide range from about 10 nm to about 60 nm. When the position in the z-direction is as large as about 10 nm, namely; when the current-screen layer is arranged at a position distant from the non-magnetic intermediate layer, the resulting device only yields high output with a large conductive area diameter in a narrow range from about 50 nm to about 60 nm. In consideration of variations and margin in the production, the position in the z-direction of the current-screen layer is preferably from about 2 nm to about 6 nm, and the conductive area diameter is preferably from about 10 nm to about 60 nm.

From viewpoints of the thickness and magnetic properties of the multilayered film, the distance between the current-screen layer and the non-magnetic conductive layer serving as the non-magnetic intermediate layer is more preferably from 1 to 3 nm. An area in the multilayered film where the giant magnetoresistance actually occurs is the non-magnetic conductive layer serving as the non-magnetic intermediate layer which is, for example, a Cu layer about 2 nm thick. Principle physical phenomena actually occur at interfaces between the non-magnetic intermediate layer and the pair of ferromagnetic layers arranged directly on the non-magnetic intermediate layer. Each of the ferromagnetic layers must have a thickness of 1 nm or more to exhibit their functions. If the thickness of each ferromagnetic layer exceeds 3 nm, further physical effects may not be obtained. Consequently, the distance between the non-magnetic intermediate layer and the current-screen layer must be 1 nm or more and is preferably 5 nm or less and more preferably 3 nm or less to yield desired effects.

EXAMPLE 3

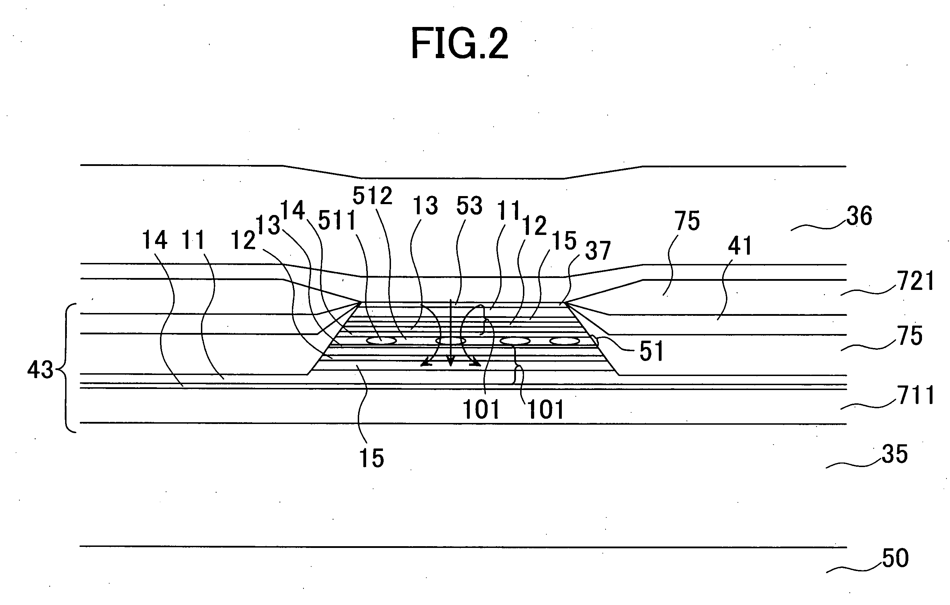

Fig. 2 is a diagram of another configuration of the giant magnetoresistive head of the present invention. The magnetic head of the present example has a current-screen layer and giant magnetoresistive multilayered films substantially symmetrically arranged so as to sandwich the current-screen layer. Fig. 2 is a schematic diagram of the magnetic head viewed from an air bearing surface facing a magnetic medium. The magnetic head comprises a substrate 50, a lower magnetic shield 35, a lower conductive gap film 711, a giant magnetoresistive multilayered film 101, a current-screen layer 51, and another giant magnetoresistive multilayered film 101 sequentially arranged on the substrate 50. The magnetic head further comprises an upper conductive gap film 721, and an upper magnetic shield 36 to thereby yield a read gap 43 for detecting read signals. An insulative film 75 defines an area in which a current is applied to the giant magnetoresistive multilayered film 101 in a direction perpendicular to the film plane and is arranged around the area.

The giant magnetoresistive multilayered films 101, the current-screen layer 51, and a single domain control ferromagnetic film 45 are patterned to substantially set shapes and thereby define an area through which the current passes and a magnetic action area. In this magnetic head, the single domain control ferromagnetic film 45 is arranged above the giant magnetoresistive multilayered films 101 to control the magnetic domain of the sensor part of the giant magnetoresistive multilayered films 101 to thereby yield stable output. The upper and lower giant magnetoresistive multilayered films 101 have basically the same but symmetrical structure with respect to the current-screen layer 51. Specifically, the magnetic head comprises the substrate 50, an underlayer 14, an antiferromagnetic film 11, a ferromagnetic pinned layer 15, a non-magnetic conductive layer 12 serving as a non-magnetic intermediate layer, and a soft magnetic free layer 13. With the interposition of the current-screen layer 51, the magnetic head further comprises another soft magnetic free layer 13, another non-magnetic conductive layer 12, another ferromagnetic pinned layer 15, another antiferromagnetic film 11, and a protective-terminal film 37 arranged in this order. A domain control film 41 comprises, for example, a hard magnetic film and is arranged in the vicinity of the sides, particularly of the edges in a track width direction, of the giant magnetoresistive multilayered films 101. The domain control film 41 makes the sensor part, namely, the soft magnetic free layer 13 of the giant magnetoresistive multilayered films 101 a single domain to thereby yield output without noise. The other configuration is similar to those of the device shown in Fig. 1.

EXAMPLE 4

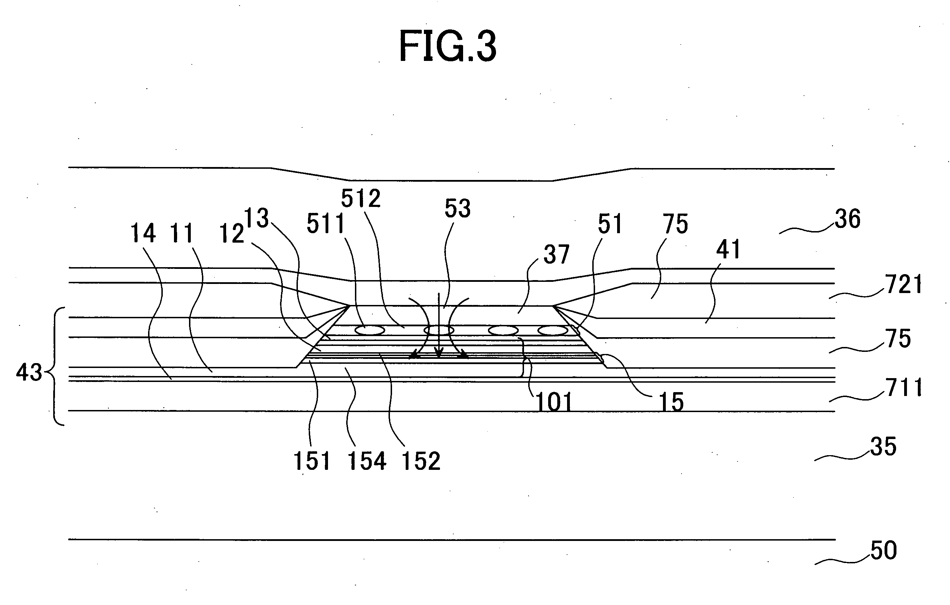

Fig. 3 illustrates yet another configuration of the giant magnetoresistive head of the present invention and is a schematic diagram of the magnetic head viewed from an air bearing surface facing a magnetic medium. The magnetic head comprises a substrate 50, a lower magnetic shield 35, a lower gap film 711, a giant magnetoresistive multilayered film 101, a current-screen layer 51 sequentially arranged on the substrate 50. The magnetic head further comprises an upper conductive gap film 721, and an upper magnetic shield 36 to thereby yield a read gap 43 for detecting read signals. Terminals 40 are arranged in contact with both ends of the giant magnetoresistive multilayered film 101 in a track width direction and serve to apply a sense current and to detect changes in electric resistance. The terminals 40 used herein are prepared by "lift off" process, but their shape and preparation process are not specifically limited.

As in the device of Fig. 1, the giant magnetoresistive multilayered film 101 in Fig. 3 comprises a continuous assemblage of an underlayer 14, an antiferromagnetic film 11, a ferromagnetic pinned layer 15, a non-magnetic conductive layer 12 serving as a non-magnetic intermediate layer, and a soft magnetic free layer 13. The ferromagnetic pinned layer 15 in this configuration comprises an assemblage of a first ferromagnetic film 151, a second ferromagnetic film 152, and an anti-parallel coupling film 154. The anti-parallel coupling film 154 applies exchange coupling to array the magnetization of the first ferromagnetic film 151 and the second ferromagnetic film 152 in anti-parallel and serves to control the substantial magnetization of the ferromagnetic pinned layer at the difference between the magnetization of the first ferromagnetic film 151 and that of the second ferromagnetic film 152. The ferromagnetic pinned layer 15 can be a single layer of a magnetic material, two-layered assemblage, or four- or more-layered assemblage within the scope of the present invention. The soft magnetic free layer 13 herein comprises a multilayer of a first soft magnetic free film and a second soft magnetic free film but can also be a single layer of a magnetic material or three- or more-layered assemblage within the scope of the present invention. The soft magnetic free layer 13 preferably comprises a Co alloy layer near to the non-magnetic conductive layer 12 and a NiFe alloy layer far from the non-magnetic conductive layer 12. This type of the soft magnetic free layer 13 can yield both satisfactory soft magnetic properties and a high MR ratio.

In the configuration of Fig. 3, a sense current applied in a direction perpendicular to the film plane flows from a terminal (not shown) through a path comprising the magnetic shield 36, the upper conductive gap film 721, and the protective-terminal film 37 via the current-screen layer 51 into the giant magnetoresistive multilayered film 101. The current further passes through a path comprising the lower conductive gap film 711, and the lower magnetic shield 35 into another terminal (not shown) to thereby constitute a current path in a direction perpendicular to the film plane. Naturally, the current path can be reversed or can be formed so as to by pass the magnetic shield part by employing another terminal configuration.

One of the features of the present invention resides in the current path in the giant magnetoresistive multilayered film 101. The current path is schematically illustrated by an arrow 53 in Fig. 3. The current-screen layer 51 includes a conductive area 511 and a non-conductive area 512. The conductive area 511 comprises, for example, particles of a highly conductive metal such as Au, Cu, or Al, shows an electric resistivity much lower than the non-conductive area 512 and has an area at a set ratio, for example, one half to one hundredth of the area of the current-screen layer 51. The current in a direction perpendicular to the film plane flows in a large area in the upper magnetic shield 36 and the upper conductive gap film 721 but is screened by action of a non-conductive film 75 to the giant magnetoresistive multilayered film 101.

The schematic configuration of the device of Fig. 3 is the same as that of Fig. 1, except the configuration of magnetic domain control. In the configuration of Fig. 3, the domain control film 41 comprises, for example, a hard magnetic film and is arranged in the vicinity of the sides of the giant magnetoresistive multilayered film 101 to make the sensor part of the giant magnetoresistive multilayered film 101, i.e., the soft magnetic free layer 13 a single domain to thereby yield output without noise. This device does not include a magnetic domain control structure covering the entire surface of the giant magnetoresistive multilayered film 101.

EXAMPLE 5

Fig. 4 is a schematic diagram of a configuration of a current-screen layer of a giant magnetoresistive head of the present invention and a production method thereof. Initially, a giant magnetoresistive multilayered film 101 is formed, and a film of Al is formed to a thickness of one to several nanometers on the surface of the giant magnetoresistive multilayered film 101. The film herein is illustrated by taking Al as an example. Alternatively, a metal capable of easily forming a corresponding covalent bonded compound and having high conductivity is preferred. Next, islands of a granular texture is formed on the Al layer. The granular texture preferably comprises Cu, Au, or another noble metal that hardly forms a compound. Not a continuous film but an island-like texture with a set size and areal ratio is formed by controlling the preparation conditions. The surface of the resulting article is exposed to an oxygen atmosphere to thereby oxidize the exposed surface of the Al layer. In this procedure, the article can be exposed to an atmosphere of a gas that can form a compound instead of oxygen or can be exposed to plasma instead of a gas. The article must essentially be exposed to an atmosphere that can react with Al or another material to form an insulative material.

The exposed portion of the Al layer not covered by the island-like texture is thus converted into a reaction product layer of a non-conductive compound; namely, Al-O in present example. Thereafter, a protective layer, terminal layers, and other components are further formed thereon to yield the current-screen layer 51. The current-screen layer 51 is preferably prepared in a vacuum film deposition apparatus and is preferably exposed to oxygen atmosphere in another chamber without exposing to the air. As shown in Fig. 4, the oxidized Al-O portion constitutes an insulative area (non-conductive area) 512, and the non-oxidized Al portion in contact with the particles of the island-like texture of, for example, Cu or Au constitutes a conductive area 511 of the current-screen layer 51.

EXAMPLE 6

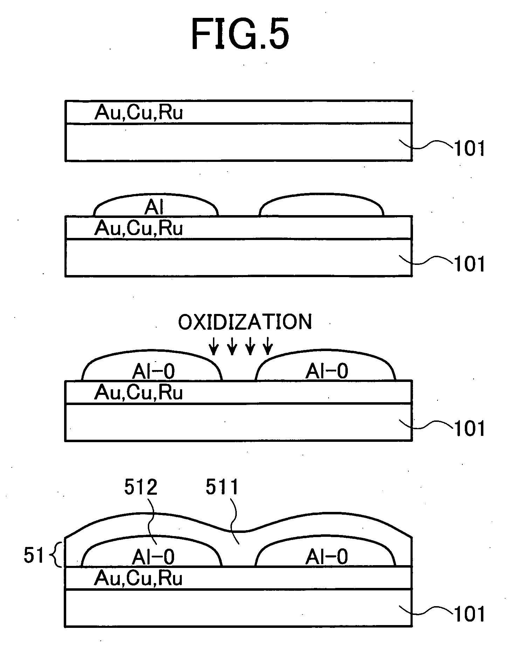

Fig. 5 is a schematic diagram of another configuration of a current-screen layer of a giant magnetoresistive head of the present invention and a production method thereof. Initially, a giant magnetoresistive multilayered film 101 is formed, and a film of Au, Cu, or Ru is formed to a thickness of one to several nanometers on the surface of the giant magnetoresistive multilayered film 101. The film herein is illustrated by taking Au, Cu, or Ru as an example. Alternatively, a noble metal or another material that hardly forms a compound and has high conductivity is preferred. Next, islands of a granular texture of Al is formed on the Au, Cu or Ru layer. Instead of Al, the granular texture preferably comprises a material that can easily form a corresponding covalent bonded compound. Not a continuous film but an island-like texture with a set size and areal ratio is formed by controlling the preparation conditions.

The surface of the resulting article is exposed to an oxygen atmosphere to thereby oxidize the exposed surface of the granular texture. In this procedure, the article can be exposed to an atmosphere of a gas that can form a compound instead of oxygen or can be exposed to plasma instead of a gas. The article must essentially be exposed to an atmosphere that can react with Al or another material to form an insulative material. The exposed portion of the granular texture made of Al is thus converted into a non-conductive compound layer, namely, an Al-O reaction product layer in this example. Thereafter, a protective layer, terminal layers, and other components are further formed thereon to yield the current-screen layer 51. The current-screen layer 51 is preferably prepared in a vacuum film deposition apparatus and is preferably exposed to oxygen atmosphere in another chamber without exposing to the air. As shown in Fig. 5, the oxidized Al-O portion constitutes an insulative area (non-conductive area) 512, and the non-oxidized Al portion and the Au, Cu, or Ru layer not covered by Al-O and in contact with the non-oxidized Al layer constitute a conductive area 511 of the current-screen layer 51.

These conductive areas and non-conductive areas can serve as a current-screen layer by action of their shape, size and arrangement without distinction of their preparation method. By having an appropriate size and configuration as described in Figs. 10 to 15, they can exhibit the advantages of the present invention. More specifically, it is preferred that the conductive area, i.e., non-oxidized Al portion or the metal particle portion has a size of 5 to 50 nm and is arranged at a distance of 1 to 5 nm and preferably 1 to 3 nm from the non-magnetic intermediate layer. If the average particle size of the metal fine particles constituting the conductive area is less than 5 nm, the current density may excessively increase. If it exceeds 50 nm, the current screen ratio may decrease.

EXAMPLE 7

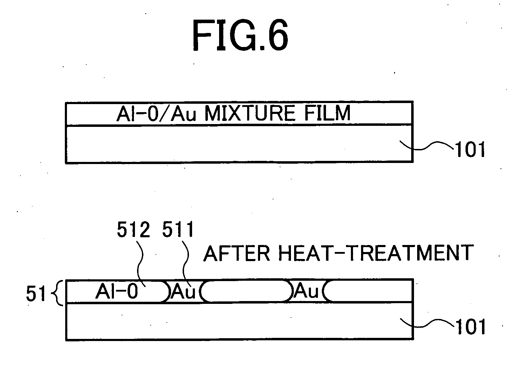

Fig. 6 is a schematic diagram of yet another configuration of a current-screen layer of a giant magnetoresistive head of the present invention and a production method thereof. Initially, a giant magnetoresistive multilayered film 101 is formed, and a mixture film of Al-O and Au is formed to a thickness of one to several nanometers on the surface of the giant magnetoresistive multilayered film 101. The film herein is illustrated by taking Au as an example. Alternatively, Cu, Ag or another noble metal that hardly forms a compound and has high conductivity is preferred. As an alternative to Al-O, a corresponding covalent bonded compound is preferred. After forming a protective film, a conductive film, and other necessary components thereon, the resulting article is subjected to heat treatment at a set temperature for a set time period. Islands of conductive particles with a set size and areal ratio can be formed from the mixture film to thereby yield a current-screen layer 51 by appropriately controlling conditions for the heat treatment, specifically the temperature and time period, the composition of Al-O and Au in the mixture film, and conditions for the film formation (film deposition). The production processes of the current-screen layer 51 such as production of the protective film are preferably performed in a vacuum film deposition apparatus. However, the heat treatment can be performed in another apparatus after exposure to the air. The Al-O portion constitutes a non-conductive area 512, and the deposited particles of, for example, Au of the island-like texture constitute a conductive area 511 of the current-screen layer 51.

EXAMPLE 8

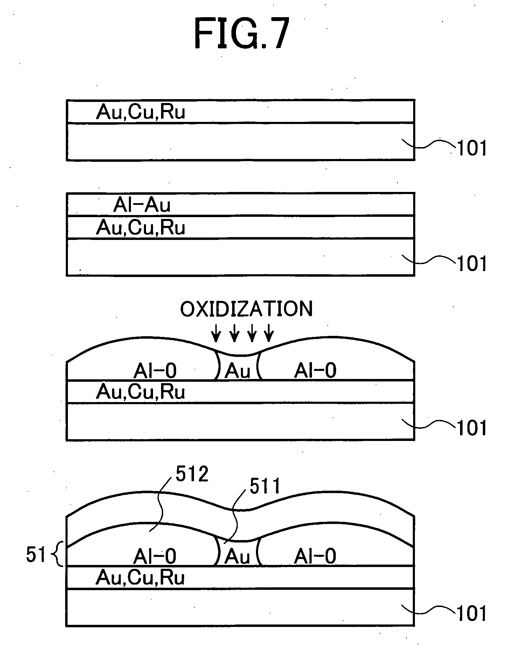

Fig. 7 is a schematic diagram of still another configuration of a current-screen layer of a giant magnetoresistive head of the present invention and a production method thereof. Initially, a giant magnetoresistive multilayered film 101 is formed, and a film of Au, Cu, or Ru is formed to a thickness of one to several nanometers on the surface of the giant magnetoresistive multilayered film 101. The film herein is illustrated by taking Au, Cu, or Ru as an example. Alternatively, a metal that hardly forms a compound and has high conductivity, such as a noble metal, is preferred. A layer of, for example, Al-Au is then formed on the Au, Cu or Ru layer. A material that can easily form a corresponding covalent bonded compound can replace Al in the Al-Au layer. Likewise, a noble metal or another material that hardly forms a compound and has high conductivity can replace Au in the Al-Au layer.

Next, the surface of the resulting article is exposed to an oxygen atmosphere to thereby oxidize the Al-Au layer. In this procedure, the article can be exposed to an atmosphere of a gas that can form a compound instead of oxygen or can be exposed to plasma instead of a gas. The article must essentially be exposed to an atmosphere that can react with Al or another material to form an insulative compound. The oxidization treatment converts the Al-Au layer into an insulative compound portion, namely, an Al-O portion and a granular non-reacted portion of Au. Thereafter, a protective layer, terminal layers, and other components are further formed thereon to yield a current-screen layer 51. The current-screen layer 51 is preferably prepared in a vacuum film deposition apparatus and is preferably exposed to oxygen atmosphere in another chamber without exposing to the air. The oxidized Al-O portion constitutes a non-conductive area 512, and the non-reacted island texture of Au constitutes a conductive area 511 of the current-screen layer 51.

EXAMPLE 9

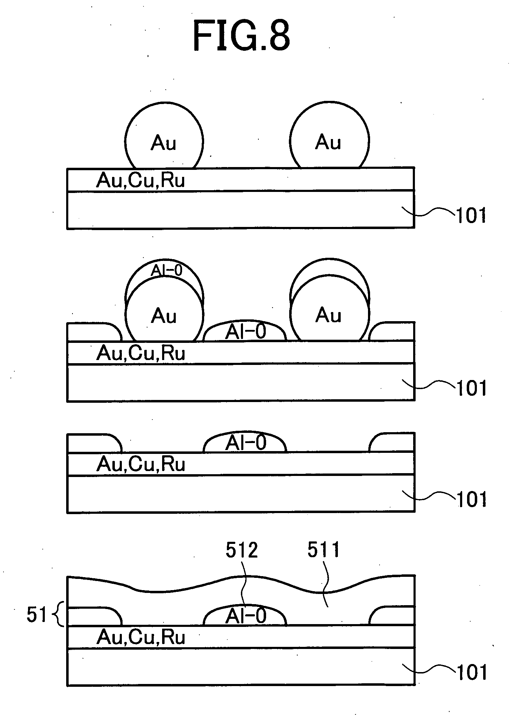

Fig. 8 is a schematic diagram of a current-screen layer of a giant magnetoresistive head of the present invention and a production method thereof by coating particles. Initially, a giant magnetoresistive multilayered film 101 is formed, and a film of Au, Cu, Ru or another noble metal is formed to a thickness of one to several nanometers on the surface of the giant magnetoresistive multilayered film 101. The film herein is illustrated by taking Au, Cu, or Ru as an example of its material. Alternatively, a noble metal or another material that hardly forms a compound and has high conductivity is preferred. Next, particles of Au are applied onto the Au, Cu or Ru layer. Another material, preferably a noble metal, can replace Au. The Au particles can be formed on the film in an appropriate density by appropriately diluting colloid particles of Au, such as micelles, in an organic solvent and spin-coating the diluted substance.

Alternatively, the Au particles can be applied by dispersing a solution containing the particles as a molecular film onto a surface of a liquid such as water, and the dispersed film is attached to the substrate. The applied particles are preferably subjected to heat treatment and/or plasma treatment to remove excess organic molecules and other unnecessary components from the particles. After the application of the particles, an insulative thin film of, for example, Al-O is formed using the particles as a mask. Thus, an Al-O layer having holes corresponding to the distribution and size of the particles can be formed. The Au particles are then removed by, for example, direction-controlled milling or cluster beam, and a protective layer and terminal layers are formed to thereby yield a current-screen layer 51. The Al-O layer on the giant magnetoresistive multilayered film layer 101 constitutes an insulative area (non-conductive area) 512, and portions corresponding to the holes of the Al-O layer constitute a conductive area 511 of the current-screen layer 51.

EXAMPLE 10

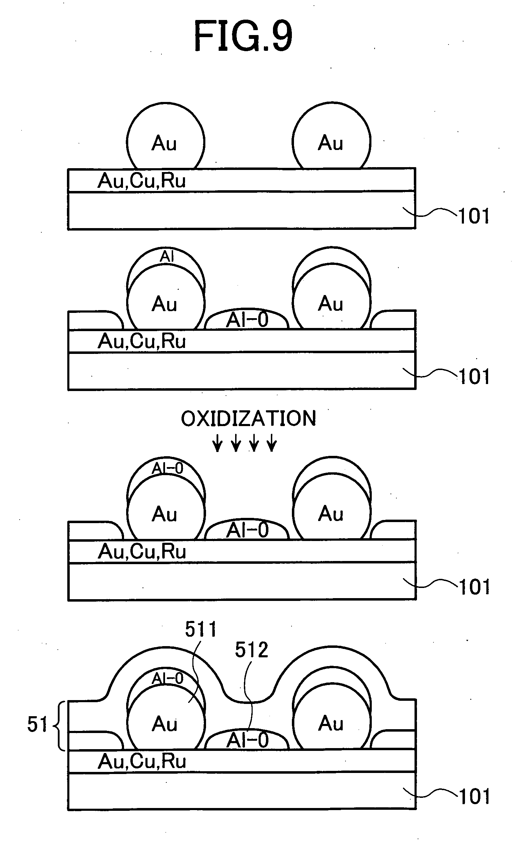

The method employed in Example 9 includes a process for removing the particles. However, the particles can remain on the film. Fig. 9 is a schematic diagram of another current-screen layer of a giant magnetoresistive head of the present invention and a production method thereof by coating particles. Initially, a giant magnetoresistive multilayered film 101 is formed, and a film of Au, Cu, Ru or another noble metal is formed to a thickness of one to several nanometers on the surface of the giant magnetore sistive multilayered film 101. The film herein is illustrated by taking Au, Cu, or Ru as an example of its material. Alternatively, a noble metal or another material that hardly forms a compound and has high conductivity is preferred.

Next, particles of, for example, Au are applied onto the Au, Cu or Ru layer. Another material, preferably a noble metal, can replace Au. The Au particles can be formed on the film in an appropriate density by appropriately diluting colloid particles of Au, such as micelles, in an organic solvent and spin-coating the diluted substance. The applied particles are preferably subjected to heat treatment and/or plasma treatment to remove excess organic molecules and other unnecessary components from the particles. After the application of the particles, a film of, for example, a metal such as Al that can easily form a non-conductive material is formed thereon by using the particles as a mask. Thus, an Al layer having holes corresponding to the distribution and size of the particles can be formed.

Next, the surface of the resulting article is exposed to an oxygen atmosphere to thereby oxidize the Al layer. In this procedure, the article can be exposed to an atmosphere of a gas that can form a compound instead of oxygen or can be exposed to plasma instead of a gas. The article must essentially be exposed to an atmosphere that can react with Al or another material to form an insulative compound. The oxidization treatment converts the Al layer with the Au particles into an insulative compound portion, namely, an Al-O portion and a granular non-reacted portion of Au. Thereafter, a protective layer, terminal layers, and other components are further formed thereon to yield a current-screen layer 51. In this configuration, the Au particles are not removed. However, the Au particles can be removed by, for example, direction-control milling or cluster beam as in the configuration of Fig. 8. The Al-O layer on the giant magnetoresistive multilayered film layer 101 constitutes an insulative area (non-conductive area) 512, and the Au particles constitute a conductive area 511 of the current-screen layer 51.

EXAMPLE 11

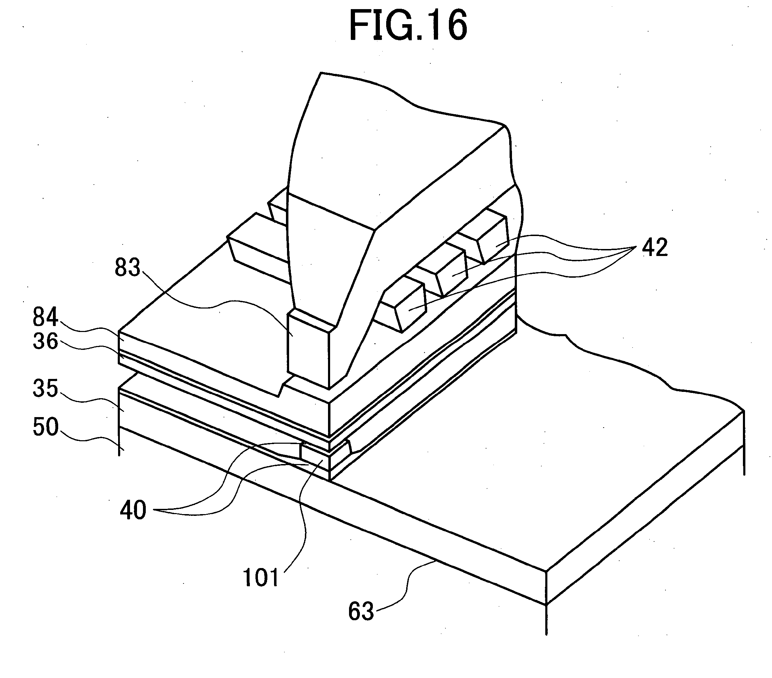

Fig. 16 is a schematic diagram of a configuration of a magnetic head including a magnetic sensor with a magnetoresistive element according to the present invention. The magnetic head comprises a substrate 50, a giant magnetoresistive multilayered film 101, a lower magnetic shield 35, an upper magnetic shield 36, a lower magnetic core 84, a coil 42, and an upper magnetic core 83 arranged on the substrate 50, as well as an air bearing surface 63. A domain control film and other components are arranged in the vicinity of the giant magnetoresistive multilayered film 101, but are not shown in the figure. This device comprises the upper magnetic shield and the lower magnetic core separately. However, the upper magnetic shield can also serve as the lower magnetic core within the scope of the present invention. The lower magnetic core 84, the coil 42, and the upper magnetic core 83 constitute a write head and serve to record a magnetic field generated from a recording gap in the air bearing surface 63 due to electromagnetic induction on a recording medium on a magnetic disk. Terminals 40 are arranged so as to sandwich the giant magnetoresistive multilayered film 101 and apply a current in a direction perpendicular to the film plane of the giant magnetoresistive multilayered film 101.

EXAMPLE 12

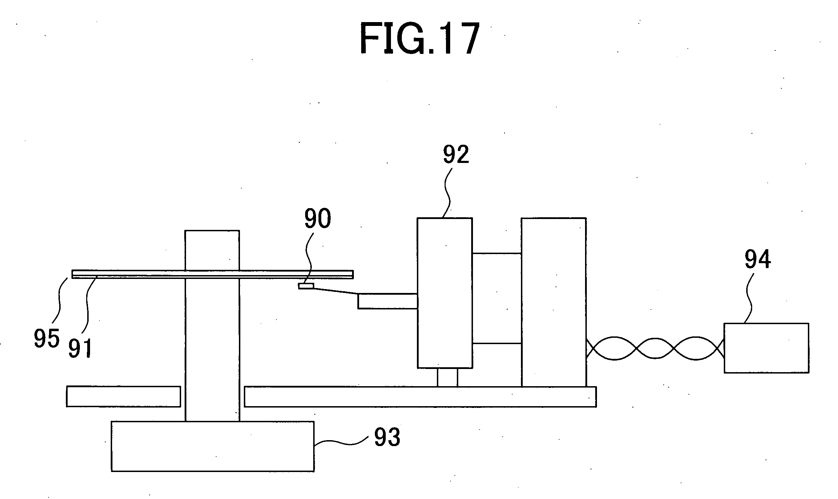

Fig. 17 is a schematic diagram of a configuration of a magnetic recording-reading apparatus according to the present invention. A disk 95 supports a recording medium 91 for magnetically recording information and is rotated by a spindle motor 93. A head slider 90 is induced onto a track on the disk 95 by action of an actuator 92. Specifically, in the magnetic disk apparatus, a read head and a record head arranged on the head slider 90 relatively move in the vicinity of a set recording position on the disk 95 and sequentially write and read signals by action of this mechanism. The actuator 92 is preferably a rotary actuator. Recording signals are transmitted through a signal analysis section 94 and are recorded on the medium by action of the record head. Output of the read head are transmitted through the signal analysis section 94 and are obtained as signals. To move the read head onto a desired recording tack, the position of the head slider 90 on the track is detected using a highly sensitive output from the read head and can be registered by controlling the actuator 92. In the configuration of Fig. 17, the device comprises one head slider 90 and one disk 95, but these components may be plural. The disk 95 may have the recording medium 91 on its both sides to record the information. To record the information on both sides of the disk 95, the head slider 90 may be arranged on both sides of the disk 95.

The magnetic head of the present invention and the magnetic recording-reading apparatus including the magnetic head having the configuration were tested and showed sufficient output and satisfactory bias properties with good reliability of their operations.

Magnetic heads prepared in following Examples 13 to 15 and magnetic disk apparatus having these magnetic heads were also tested and showed sufficient output and satisfactory bias properties with good reliability of their operations.

EXAMPLE 13

A magnetic head was prepared. This magnetic head included a magnetoresistive multilayered film, a pair of terminal films being arranged above and below a film plane of the multilayered film, and a device for partially reducing an area constituting a path of a current flowing through the terminal films in a direction perpendicular to the film plane of the magnetoresistive multilayered film. The magnetoresistive multilayered film included a soft magnetic free layer, a ferromagnetic pinned layer, and a non-magnetic conductive layer arranged between the soft magnetic free layer and the ferromagnetic pinned layer.

EXAMPLE 14

A magnetic head was produced in the following manner. Initially, a lower shield layer was formed on a substrate; a lower conductive gap film was formed on the lower shield layer; a magnetoresistive element was formed on the lower conductive gap film; a current-screen layer was formed on the magnetoresistive element; an upper conductive gap film was formed on the current-screen layer; and an upper shield layer was formed on the upper conductive gap film. In this procedure, the current-screen layer was formed by forming a film of a conductive material, and forming an island-like non-conductive layer on the film of the conductive material.

EXAMPLE 15

A magnetic head was produced in the following manner. Initially, a lower shield layer was formed on a substrate; a lower conductive gap film was formed on the lower shield layer; a magnetoresistive element was formed on the lower conductive gap film; a current-screen layer was formed on the magnetoresistive element; an upper conductive gap film was formed on the current-screen layer; and an upper shield layer was formed on the upper conductive gap film. In this procedure, the current-screen layer was formed by forming a mixture film of an oxide and a noble metal, and subjecting the mixture film to heat treatment.

According to the following methods employed in Examples 16 to 18, the magnetic heads of the present invention could satisfactorily produced.

EXAMPLE 16

A magnetic head was produced by the procedure of Example 14, except that the island-like non-conductive layer was formed by applying a solvent containing noble metal fine particles onto a film of the conductive material, removing the solvent, and forming a film of a non-conductive material on the noble metal fine particles.

EXAMPLE 17

A magnetic head was produced by the procedure of Example 16, except that the film of the non-conductive material was formed on the noble metal fine particles by forming a film of a conductive material on the noble metal fine particles, and oxidizing the film of the conductive material.

EXAMPLE 18

A magnetic head was produced by the procedure of Example 16, except that the noble metal fine particles were finally removed.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

**Claims**

1. A magnetic head comprising:

   a multilayered film (101) exhibiting magnetoresistance;
   a pair of terminal films (40) being arranged above and below a film plane of the multilayered film; and
   a current-screen layer (51) being arranged between the pair of the terminal films and comprising a non conductive area (512) and a conductive area (511).

2. The magnetic head according to claim 1, wherein the current-screen layer (51) is arranged in the multilayered film (101).

3. The magnetic head according to claim 2, wherein the multilayered film (101) comprises:

   a ferromagnetic pinned layer (15);
   a non-magnetic intermediate layer (12);
   a first soft magnetic free layer (13);
   a current-screen layer (51); and
   a second soft magnetic free layer (13) sequentially laminated.

4. The magnetic head according to claim 2, wherein the multilayered film comprises:

   a ferromagnetic pinned layer (15);
   a non-magnetic intermediate layer (12);
   a soft magnetic free layer (13);
   a current-screen layer (51); and
   a domain control layer (41) sequentially laminated.

5. The magnetic head according to claim 4, further comprising a non-magnetic separation layer (411) arranged between the soft magnetic free layer and the current-screen layer.

6. The magnetic head according to claim 2, wherein the multilayered film comprises:

   a ferromagnetic pinned layer (15);
   a non-magnetic intermediate layer (12);
   a first soft magnetic free layer (13);
   a current-screen layer (51);
   a second soft magnetic free layer (13);
   a non-magnetic separation layer (411); and
   a domain control layer (41) sequentially laminated.

7. The magnetic head according to claim 1, wherein the conductive area constitutes one half to one hundredth of the total area of the current-screen layer.

8. The magnetic head according to claim 2, wherein the multilayered film comprises:

   a soft magnetic free layer (13);
   a non-magnetic intermediate layer (12);
   a first ferromagnetic pinned layer (15);
   a current-screen layer (51);
   a second ferromagnetic pinned layer (15);and
   an antiferromagnetic layer (11) sequentially laminated.

9. The magnetic head according to claim 3, wherein the distance between the current-screen layer (51) and the non-magnetic intermediate layer (12) is 1 nm or more and 5 nm or less.

10. The magnetic head according to claim 4, wherein the distance between the current-screen layer (51) and the non-magnetic intermediate layer (12) is 1 nm or more and 5 nm or less.

11. The magnetic head according to claim 5, wherein the distance between the current-screen layer (51) and the non-magnetic intermediate layer (12) is 1 nm or more and 5 nm or less.

12. The magnetic head according to claim 9, wherein the distance between the current-screen layer (51) and the non-magnetic intermediate layer (12) is 1 nm or more and 3 nm or less.

13. The magnetic head according to claim 10, wherein the distance between the current-screen layer (51) and the non-magnetic intermediate layer (12) is 1 nm or more and 3 nm or less.

14. The magnetic head according to claim 11, wherein the distance between the current-screen layer (51) and the non-magnetic intermediate layer (12) is 1 nm or more and 3 nm or less.

15. The magnetic head according to any one of claims 1 - 14, wherein the current-screen layer (51) comprises a mixture of a non-conductive material and a metal conductive material.

16. The magnetic head according to any one of claims 1 - 14, wherein the current-screen layer (51) comprises a mixture of at least one of silicon oxide and aluminum oxide with at least one element selected from the group consisting of copper, gold, silver, ruthenium, iridium, rhodium, rhenium, and osmium.

17. The magnetic head according to any one of claims 1 - 14, wherein the current-screen layer (51) comprises a mixture of at least one element selected from aluminum and silicon with at least one oxide selected from aluminum oxide and silicon oxide.

18. The magnetic head according to any one of claims 1 - 14, wherein the current-screen layer (51) comprises a mixture of aluminum and aluminum oxide.

19. A magnetic head comprising:

a multilayered film (101) exhibiting magnetoresistance;
a pair of terminal films (40) being arranged above and below a film plane of the multilayered film; and
a current-screen layer (51) being arranged between the pair of the terminal films,
the current-screen layer (51) comprising:

a film of a first conductive material;
an island-like non-conductive layer arranged on the film of the first conductive material; and
a second conductive material filling a gap among the island-like non-conductive layer.

20. The magnetic head according to claim 19, wherein the current-screen layer (51) comprises novel metal particles arranged among individual islands constituting the island-like non-conductive layer, and wherein the novel metal particles have an average particle size of 5 nm to 50 nm.

# FIG.1

EP 1 400 957 A2

# FIG.2

EP 1 400 957 A2

# FIG.3

EP 1 400 957 A2

# FIG.4

Al

101

Cu,Au

Al

101

OXIDIZATION
↓ ↓ ↓ ↓

Cu,Au

Al    Al-O

101

511        512

51 { Cu,Au
    Al    Al-O

101

# FIG.5

| Au,Cu,Ru |
| --- |

~101

Al          Al
| Au,Cu,Ru |
| --- |

~101

OXIDIZATION
↓ ↓ ↓ ↓

Al-0          Al-0
| Au,Cu,Ru |
| --- |

~101

512        511

51 {  Al-0          Al-0
| Au,Cu,Ru |
| --- |

~101

# FIG.6

| Al-0/Au MIXTURE FILM |
|:---:|
| |

~101

512 511　　AFTER HEAT-TREATMENT

51 { | Al-0 | Au | | Au | |

~101

# FIG.7

# FIG.8

# FIG.9

OXIDIZATION

EP 1 400 957 A2

# FIG.10

r-DIRECTION

z-DIRECTION

CONDUCTIVE AREA DIAMETER=6m

CONDUCTIVE AREA DIAMETER=12m

DENSITY IS HIGH IN THE DIRECTION OF Z

CONDUCTIVE AREA DIAMETER

r=0

CONDUCTIVE AREA DIAMETER=18m

CONDUCTIVE AREA DIAMETER=24m

DENSITY IS LOW IN THE DIRECTION OF Z

# FIG.11

# FIG.12

# FIG.13

# FIG.14

SCREEN RATIO
- ○ $\beta$ =2
- △ $\beta$ =10
- □ $\beta$ =20
- ◇ $\beta$ =100

# FIG.15

FIG.16

# FIG.17

EP 1 400 957 A2

# FIG.18A

40

40

51 711 101 721

# FIG.18B

40

40

51 711 101 721

# FIG.18C

40

40

51 711 101 721

# FIG.19

40

101

40

51 721

711

# FIG.20A

13
51
13
12
15
11

101

# FIG.20B

41
411
51
13
12
15
11

101

# FIG.20C

41
411
13
51
13
12
15
11

101

# FIG.21A

# FIG.21B

# FIG.22

AREAL RATIO=1/SCREEN RATIO
=CONDUCTIVE AREA OF CURRENT-SCREEN-LAYER
/(CONDUCTIVE AREA OF CURRENT-SCREEN-LAYER
+NON-CONDUCTIVE AREA OF CURRENT-SCREEN-LAYER)

# FIG.23

# FIG.24